(19) Europäisches Patentamt
European Patent Office
Office européen des brevets

(11) EP 1 670 852 B1

(12) **FASCICULE DE BREVET EUROPEEN**

(45) Date de publication et mention de la délivrance du brevet:
**10.12.2008 Bulletin 2008/50**

(21) Numéro de dépôt: **04817104.5**

(22) Date de dépôt: **29.09.2004**

(51) Int Cl.:
***C08K 5/00*** *(2006.01)*

(86) Numéro de dépôt international:
**PCT/FR2004/050470**

(87) Numéro de publication internationale:
**WO 2005/033190 (14.04.2005 Gazette 2005/15)**

(54) **MATERIAU THERMODUR A BASE DE POLYTHIOURETHANE ANTIPLASTIFIE ET LENTILLE OPHTALMIQUE COMPRENANT UN MATERIAU THERMODUR ANTIPLASTIFIE**

WÄRMEHÄRTENDES MATERIAL AUF DER BASIS VON MIT ANTIWEICHMACHER VERSETZTEM POLYTHIOURETHAN UND OPHTHALMISCHE LINSE, UMFASSEND EIN MIT ANTIWEICHMACHER VERSETZTES WÄRMEHÄRTENDES MATERIAL

THERMOSETTING MATERIAL BASED ON ANTIPLASTICIZED POLYTHIOURETHANE, AND OPHTHALMIC LENS COMPRISING AN ANTIPLASTICIZED THERMOSETTING MATERIAL

(84) Etats contractants désignés:
**AT BE BG CH CY CZ DE DK EE ES FI FR GB GR HU IE IT LI LU MC NL PL PT RO SE SI SK TR**

(30) Priorité: **03.10.2003 FR 0350648**

(43) Date de publication de la demande:
**21.06.2006 Bulletin 2006/25**

(73) Titulaire: **ESSILOR INTERNATIONAL COMPAGNIE GENERALE D'OPTIQUE**
**94227 Charenton cédex (FR)**

(72) Inventeurs:
- **DROGER, Nicolas**
  **QC G1S 2V1 Quebec (CA)**
- **HALARY Jean-Louis**
  **75011 PARIS (FR)**
- **RICHARD Gilles**
  **94140 ALFORVILLE (FR)**
- **RICKWOOD Martin**
  **303 Rabbit Run**
  **CLARKS GREEN**
  **Etats-Unis d'Amerique (US)**

(74) Mandataire: **Catherine, Alain et al**
**Cabinet Harlé & Phélip**
**7 rue de Madrid**
**75008 Paris (FR)**

(56) Documents cités:
**EP-B- 0 329 388**
**US-A- 3 386 935**
**US-A- 3 431 230**
**US-A- 4 575 385**
**US-A- 4 686 250**
**US-A- 4 824 888**
**US-A- 5 512 376**
**US-A- 5 962 561**
**US-A1- 2003 144 452**

- **W. J. JACKSON AND J. R. CALDWELL: "Antiplasticization III Characteriscis and Properties of antiplasticizable polymers" JOURNAL OF APPLIED POLYMER SCIENCE, vol. 11, 1967, pages 227-244, XP002319863 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 670 852 B1

## Description

La présente invention concerne d'une manière générale de nouveaux matériaux thermodurs comportant des atomes de S ayant une résistance aux chocs améliorée, et des articles d'optique, en particulier des lentilles ophtalmiques, réalisées avec des matériaux thermodurs, notamment comportant des atomes de S à résistance aux chocs améliorée.

La recherche de nouveaux matériaux à base de polymères pour produire les verres dits organiques est une préoccupation majeure dans le domaine ophtalmique.

Pour l'application dans le domaine ophtalmique, ces matériaux doivent bien sûr être transparents, mais également avoir un indice de réfraction $(n_D^{25})$ élevé, afin de réduire l'épaisseur du verre, et aussi de très bonnes propriétés mécaniques, notamment en ce qui concerne la résistance aux chocs et à la rayure.

Des matériaux classiques d'indice de réfraction élevé utilisés en optique ophtalmique sont des matériaux plastiques thermodurs à base de polythiouréthane. Ces matériaux permettent d'atteindre des indices de réfraction $(n_D^{25})$ égaux ou supérieurs à 1,67.

Toutefois, ces matériaux thermodurs à base de polythiouréthane présentent une faible résistance aux chocs, notamment par comparaison à un matériau tel que le polycarbonate $(n_D^{25} = 1{,}59)$. Ces matériaux thermodurs à base de polythiouréthane sont formés par polyaddition de polythiols avec des polyisocyanates. Leur fragilité provient de la forte densité de réticulation nécessaire à l'obtention de propriétés thermiques suffisantes à une application ophtalmique.

Ils sont par contre bien plus résistants aux solvants que le polycarbonate, thermoplastique.

Il serait donc souhaitable d'améliorer les propriétés de résistance aux chocs de ces matériaux tout en conservant leurs propriétés intrinsèques.

D'une manière générale, diverses méthodes ont été mises au point et étudiées afin d'améliorer la résistance à la rupture et aux chocs des matrices de polymère. Les solutions connues, à la fois pour les thermoplastiques et les thermodurs, passent par la présence d'une deuxième phase, plus souple. Cette phase agit comme concentrateur de contraintes au sein du matériau, et permet la relaxation de l'état de contrainte triaxial (par cavitation ou développement de plasticité), réduit la vitesse de propagation de fissures (déviation de fissures, formation de fissures multiples) et facilite la déformation en cisaillement dans le réseau.

La séparation de phase peut être obtenue en cours de polymérisation, en combinant différents types de monomères ou de prépolymères induisant des segments souples et des segments rigides.

Lors de la construction du polymère, une organisation se crée du fait de la différence d'affinité entre les segments. Selon les monomères choisis, la ségrégation peut être plus ou moins importante.

Cette méthode est souvent appliquée à la formation de polymères segmentés linéaires (thermoplastiques) mais peut également être utilisée pour les polymères réticulés.

La réaction a généralement lieu en deux étapes. Dans un premier temps, un prépolymère souple aux chaînes longues est formé, puis des segments rigides sont incorporés, après éventuellement un ajustement de viscosité par ajout de monomères. Le paramètre déterminant l'évolution de la morphologie est la solubilité du deuxième réactif dans le prépolymère et son évolution au cours de la croissance des chaînes.

De nombreuses études ont été menées sur les polyuréthanes et hybrides polyuréthane/urée.

Des études menées sur les réseaux époxy ont pu mettre en évidence une augmentation de la résistance aux chocs en présence d'additifs antiplastifiants et amortissants. Des études récentes (Sauvant V ; Halary J.L ; J.Appl. Polym. Sci ; 82, 759 (2001) et Sauvant V ; Halary J.L ; Composite Sci et Tech ; 62, 481 (2002)) ont en effet montré que dans le cas de réseaux époxy, il est possible d'obtenir une séparation de phase tout en conservant le caractère antiplastifié du matériau. La morphologie du matériau est nanocomposite, des agrégats de molécules d'additifs sont dispersés au sein d'une matrice plastifiée par les molécules résiduelles.

Avec 15% en poids d'additifs antiplastifiants à effet amortissant, le module de conservation E' à 25°C a ainsi été multiplié par 1,3 et taux de restitution d'énergie $G_{IC}$ par 5. De plus, la prise d'humidité a été abaissée. On notera qu'avec un antiplastifiant non amortissant, le gain en module est le même, mais il y a très peu de gain en tenacité. En effet, la chute de la température de transition vitreuse permet au matériau antiplastifié d'être plus tenace que la matrice pure, mais sans atteindre la ténacité du matériau antiplastifié et amorti.

Le brevet US-4,348,497 décrit des compositions acryliques thermodurcissables comprenant comme antiplastifiant un penthaérytritol tétrabenzoate. L'antiplastifiant augmente la dureté et la résistance aux solvants.

Le matériau est utilisé pour réaliser des revêtements.

Le brevet US-5,512,376 décrit des compositions vinyl/SiH comprenant un antiplastifiant qui est incorporé dans la composition polymérisable avant polymérisation.

Le brevet US 4,686,250 décrit un matériau thermodur résultant de la polymérisation d'une composition polymérisable comprenant une résine époxy avec une diamine. Ladite diamine comprend des groupes qui peuvent être choisis parmi l'oxygène, le soufre, un groupe cétone et un groupe alkylène éventuellement substitué. Il est possible d'incorporer dans la composition polymérisable des agents modifiants pour augmenter le module de la résine époxy durcie, lesquels peuvent être choisis parmi les antiplastifiants, les fortifiants, et d'autres agents modifiants connus de l'homme du métier.

L'invention a donc pour objet de fournir des matériaux thermodurs comportant des atomes de S, préférentiellement comportant une matrice de polythiouréthane ou résultant de la polymérisation d'au moins un polyépisulfure, notamment un diépisulfure, et ayant une résistance aux chocs améliorée.

L'invention a encore pour objet de fournir une lentille ophtalmique comprenant une matrice thermodure optiquement transparente, en particulier comportant des atomes de S, préférentiellement une matrice de polythiouréthane ou résultant de la polymérisation d'au moins un polyépisulfure, notamment un diépisulfure, ayant une résistance aux chocs améliorée.

Selon l'invention, les buts ci-dessus sont atteints, en ajoutant à la matrice thermodure, notamment une matrice de polythiouréthane, au moins une molécule non réactive avec la matrice qui confère à celle-ci des propriétés d'antiplastification et de préférence également d'amortissement.

<u>Définition</u>

<u>Antiplastification</u>

L'introduction d'une petite molécule non réactive à un polymère entraîne la plastification du matériau, qui se caractérise par une chute de la température de transition vitreuse (Tg), ainsi que par une baisse du module de conservation par rapport au matériau pur. L'additif est alors appelé plastifiant. L'antiplastification, mise en évidence par Jackson et Caldwell (Jackson W. J., Caldwell J.R, J.Appl. Polym. Sci, 11, 211 (1967), Jackson W.J., Caldwell J.R, J.Appl. Polym. Sci, 11, 227 (1967)) se traduit également par une baisse de la température de transition vitreuse, mais se différencie de la plastification par une augmentation du module de conservation sur une plage de températures, généralement proche de la température ambiante. Dans ce cas, l'additif est appelé antiplastifiant.

Cette particularité provient de la forte atténuation d'une transition secondaire importante, proche de la température ambiante. Or, la présence d'une transition secondaire implique une chute du module de conservation. L'atténuation de la transition entraîne la disparition de la chute de module dans cette zone de température. Ainsi, l'effet plastifiant de la molécule sur le module du matériau est masqué dans la zone de température concernée par l'atténuation de la transition secondaire : le matériau est antiplastifié.

Une bonne affinité entre l'additif et le polymère est nécessaire à l'antiplastification. Ceci est souvent atteint en utilisant un additif dont la structure chimique est proche de celle de la matrice.

L'origine moléculaire de ce phénomène n'a été expliqué que récemment Il s'agit d'une immobilisation des mouvements responsables de la transition secondaire par les molécules d'additifs, au niveau des points de propagation des mouvements.

<u>Amortissement</u>

L'amortissement traduit l'augmentation de la ténacité de la résistance aux chocs dus à une séparation de phase au sein du matériau. L'obtention conjointe de l'antiplastification et de l'amortissement passe par la sélection d'un additif aux propriétés de solubilité particulières. Il doit être totalement miscible avec les monomères, mais non miscible avec le polymère formé.

La séparation de phase intervient pendant la polymérisation.

Par séparation de phase, on entend la présence d'au moins une nouvelle phase sous forme de domaines dont la taille maximale est inférieure ou égale à 10 micromètres et dont la teneur en additifs antiplastifiants est supérieure à celle du reste de la matrice polymère tridimensionnelle.

Préférentiellement, la taille maximale de ces domaines est inférieure à 500 nm.

Mieux encore, ces domaines ont une taille maximale inférieure à 50 nm. Dans ce dernier cas, on considère, par définition, que l'on est en présence d'une nanoséparation de phase.

De façon optimale, la taille des domaines est inférieure ou égale à 20 nm.

Selon un premier aspect de l'invention, on fournit un matériau plastique thermodur comprenant une matrice tridimensionnelle comportant des atomes de S, de préférence une matrice de polythiouréthane ou de polyépisulfure, et au moins un additif antiplastifiant non réactif avec la matrice, et de préférence choisi de façon à provoquer une nanoséparation de phase au sein du matériau thermodur final.

Selon un second aspect de la présente invention, on fournit une lentille ophtalmique formée d'un matériau plastique thermodur, optiquement transparent, comprenant une matrice polymère tridimensionnelle dont le module de

perte (E") présente une transition vitreuse secondaire (β), notamment de polythiouréthane, et au moins un additif antiplastifiant, non réactif avec la matrice polymère et de préférence provoquant une nanoséparation de phase au sein du matériau plastique thermodur final.

Les matériaux thermodurs antiplastifiés selon l'invention ont de préférence un taux de restitution d'énergie $G_{IC}$ supérieur à 0,15 $kJ.m^{-2}$ et mieux de 0,20 ou plus.

Les agents antiplastifiants selon l'invention ont un domaine de température d'antiplastification qui va généralement de 0 à 85°C.

Comme indiqué précédemment, les additifs antiplastifiants ont en général un paramètre de solubilité ($\delta_a$) assez proche des monomères ayant servi à former la matrice pour y être miscible, mais de préférence suffisamment éloigné de celui de la matrice formée pour qu'une séparation de phase puisse se produire.

En général, le paramètre de solubilité δ satisfait la relation :

$$\delta_{mo} - \delta_a < 5\ MPa^{1/2}$$

où $\delta_{mo}$ est le paramètre de solubilité des monomères ayant servi à réaliser la matrice, notamment des polyisocyanates et polythiols dans le cas d'une matrice polythiouréthane.

De préférence également, le paramètre de solubilité δ satisfait la relation :

$$\delta_{ma} - \delta_a > 4\ MPa^{1/2},$$

où $\delta_{ma}$ est le paramètre de solubilité de la matrice.

Généralement, l'additif antiplastifiant a un paramètre de solubilité satisfaisant la relation :

$$19 \leq \delta_a \leq 23.$$

La loi d'addivité utilisée pour le calcul des paramètres de solubilité δ ($MPa^{1/2}$) est la suivante :

$$\delta = \left( \frac{-\sum_z {}^z\Delta U}{\sum_z {}^zV} \right)^{\frac{1}{2}},$$ avec $^z\Delta U$: Energie Molaire de Vaporisation et $^zV$: Volume Molaire

Il existe plusieurs classifications (Hoy, Fedors, Bondi, ...). Les tables de Fedors ont été choisies dans la mesure où les valeurs les plus fréquemment rencontrées dans le « Handbook of Solubility Parameters » (Barton A.F.M., Handbook of Solubility Parameters, CRC Press, Boca Raton (1991)) proviennent de cet auteur.

Les additifs antiplastifiants convenant pour la présente invention peuvent être choisis parmi les sulfures de dialkyle, les sulfures de diaryle, les sulfures de dialkylaryle, les sulfures d'alkyle et d'aryle, les sulfures d'aryle et d'alkylaryle, les sulfures d'aryle et d'alkylsilane, les dérivés carbonyles, les S-arylthioalkylates, les bis-arylthioalkyles, les dérivés de thiourée, les dérivés d'uréthane, les dérivés de diuréthane et leurs mélanges.

Une première classe d'additifs antiplastifiants est constituée par les thioéthers de formule :

$R^1-S-R^2$

où $R^1$ et $R^2$, identiques ou différents, représentent indépendamment l'un de l'autre, un radical alkyle, de préférence un radical alkyle en $C_1$-$C_{12}$, mieux en $C_4$-$C_{10}$ et notamment un radical octyle ; un radical cycle alkyle, de préférence à 6 chaînons, tel que le radical cyclohexyle ; un radical aryle tel que le radical phényle ; un radical arylalkyle tel que le radical benzyle ; un radical

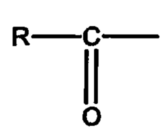

où R est un radical alkyle, de préférence en $C_1$-$C_6$, tel que méthyle, éthyle, propyle ; un radical trialkylsilane, en particulier triméthylsilane.

Une seconde classe d'additifs antiplastifiants est constituée par les dérivés carbonyles de formule :

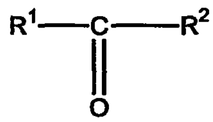

où $R^1$ et $R^2$ sont tels que définis précédemment.

Une troisième classe est constituée par les thiourées de formule :

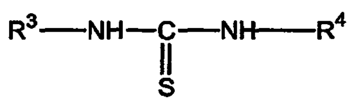

où $R^3$ et $R^4$, identiques ou différents, représentent indépendamment l'un de l'autre, un radical alkyle, de préférence en $C_1$-$C_{12}$, mieux en $C_4$-$C_{10}$, un radical cycloalkyle, de préférence à 6 chaînons tel que le radical cyclohexyle ; un radical alkyle porteur d'un hétérocycle azoté et/ou oxygéné tel qu'un radical 4-morpholinoalkyle, en particulier un radical 4-morpholinoéthyle.

Une quatrième classe d'additifs antiplastifiants sont les uréthanes de formule :

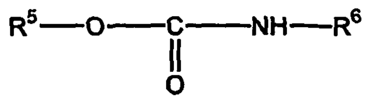

où $R^5$ et $R^6$, identiques ou différents, représentent indépendamment l'un de l'autre, un groupe cycloalkyle, de préférence à 6 chaînons, tel que le radical cyclohexyl; un groupe cycloalkylalkyle tel qu'un groupe cyclohexylalkyle, notamment un groupe cyclohexylpropyl ; un groupe aryle tel que le groupe phényle ; un groupe arylalkyle notamment le groupe phénylpropyle.

Une cinquième classe d'additifs antiplastifiants est constituée par les diuréthanes.

Un premier groupe de diuréthane sont ceux de formule :

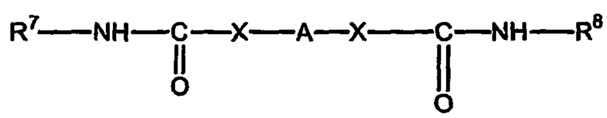

dans laquelle A représente un groupe alkylène en $C_1$-$C_{12}$, de préférence en $C_6$-$C_{10}$, notamment un groupe octylène, un groupe :

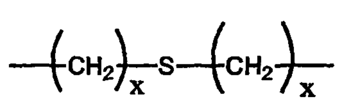

où:

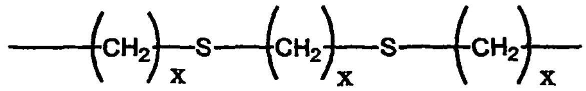

où x est un entier de 1 à 6, de préférence égal à 2 ; X représente - O- ou -S- ; et $R^7$ et $R^8$ représentent, indépendamment l'un de l'autre, un groupe cycloalkyle, de préférence à 6 chaînons, notamment un groupe cyclohexyle, ou un groupe aryle, de préférence à 6 chaînons, notamment un groupe phényle.

Un second groupe de diuréthanes sont les diuréthanes de formule :

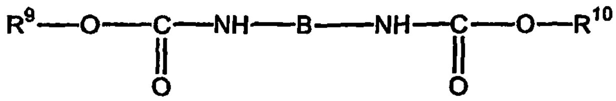

dans laquelle B représente un radical de formule :

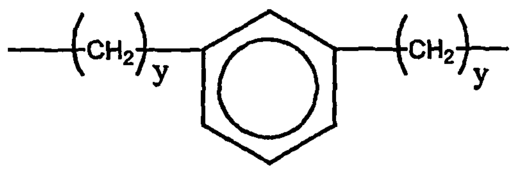

ou

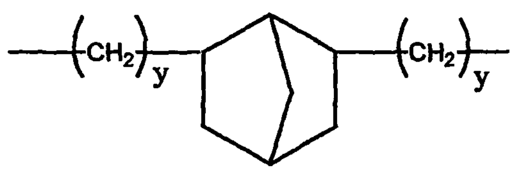

où y est un entier de 1 à 4, de préférence égal à 1, et $R^9$ et $R^{10}$ représentent, indépendamment l'un de l'autre, un radical cycloalkyl- alkyle, notamment un radical cyclohexyl($C_1$-$C_6$)alkyle tel qu'un radical cyclohexyléthyle ou cyclohexylpropyle; un radical aryl($C_1$-$C_6$)alkyle, notamment un radical phénylpropyle ; un radical cycloalkyl (ponté) ($C_1$-$C_6$)alkyle tel que le radical norbornylméthyle ; les radicaux éther-oxydes de formule :

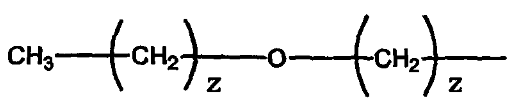

où z est un entier de 1 à 4, de préférence égal à 2.

Parmi les additifs plastifiants préférés, on peut citer :

- additifs commerciaux,

| Abbréviation | Nom | Formule | $\delta_a$ $MPa^{1/2}$ | $n_{GD}$ |
|---|---|---|---|---|
| os | Sulfure de dioctyle | 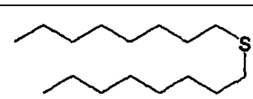 | 17,5 | 1,466 |

(suite)

| Abbréviation | Nom | Formule | $\delta_a$ MPa$^{1/2}$ | $n_{GD}$ |
|---|---|---|---|---|
| bps | Sulfure de benzyle et phényle | 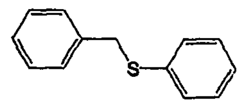 | 22,0 | 1,649 |
| dbs | Sulfure de dibenzyle | 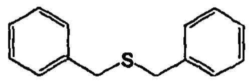 | 21,7 | 1,632 |
| 4ptbp | 4-(p-tolylthio) benzophenone | 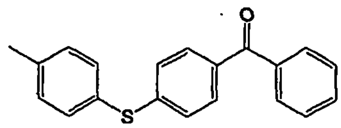 | 23,8 | 1,728 |
| bptm | bis(phénylthio)méthane | 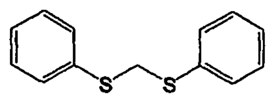 | 23,0 | 1,689 |
| sptp | S-phénylthiopropionate | 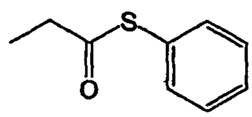 | 21,9 | 1,555 |
| ptm-tms | Phénylthiométhyl triméthylsilane | 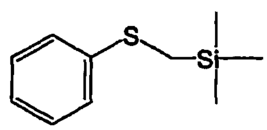 | 18,5 | 1,539 |
| ch-me-tu | 1-cyclohexyl-3-(2-morpholinoéthyl)-2-thiourée | 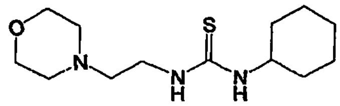 | 22,7 | 1.600 |

- additifs synthétisés,

| Abbréviation | Nom | Formule | $\delta_a$ MPa$^{1/2}$ | $n_{GD}$ |
|---|---|---|---|---|
| chp-ch-u | cyclohexylpropyl-cyclohexyl-uréthane | 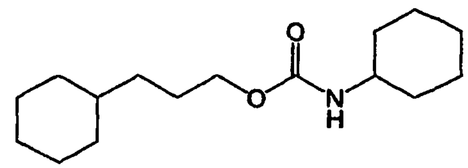 | 19,7 | 1,509 |
| pp-ch-u | phénylpropyl-cyclohexyl-uréthane | 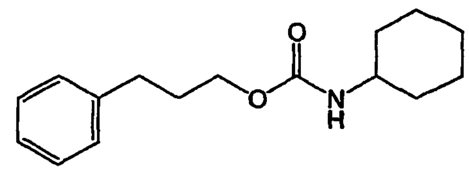 | 20,9 | 1,558 |
| Ch-ch-odu | cyclohexyl-cyclohexyl-(octane diuréthane) | 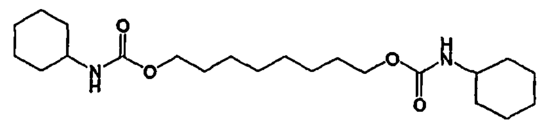 | 20,6 | 1,527 |
| Chp-chp-xdu | cyclohexylpropyl-cyclohexylpropyl xylylène diuréthane | 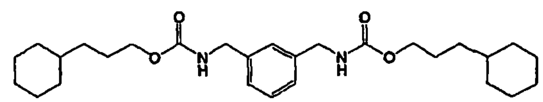 | 21,1 | 1,566 |
| che-che-xdu | cyclohexyléthyl-cyclohexyléthyl xylylène diuréthane | 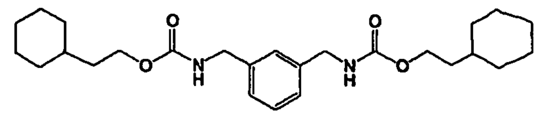 | 21,4 | 1,573 |
| pp-p-u | phénylpropyl-phényl-uréthane | 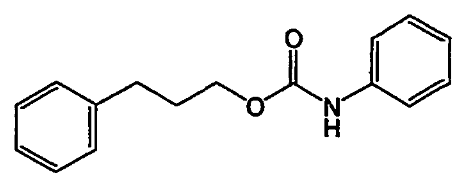 | 22,4 | 1,634 |

(suite)

| Abréviation | Nom | Formule | $\delta_a$ $MPa^{1/2}$ | $n_{GD}$ |
|---|---|---|---|---|
| pe-pe-xdu | propoxyéthyl-propoxyéthyl xylylène diuréthane | 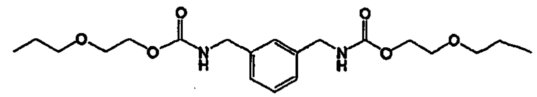 | 21,5 | 1,556 |
| nm-nm-xdu | norbornaneméthyl-norbornaneméthyl xylylène diuréthane | 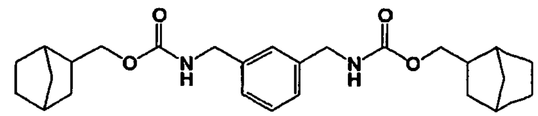 | 22,3 | 1,615 |
| pp-pp-xdu | phenylpropyl-phenylpropyl-xylylènediurethane | 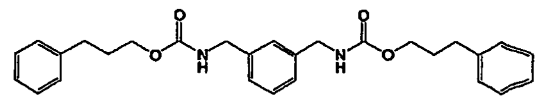 | 22,8 | 1,637 |
| ch-ch-tdedSu | cyclohexyl-cyclohexyl-(thiodiéthane di-S-thiouréthane) | 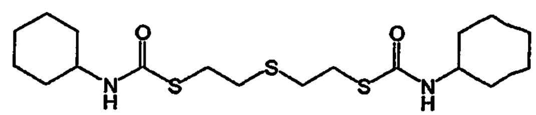 | 22,8 | 1,606 |
| p-p-tdedSu | phényl-phényl-(thiodiéthane di-S-thiouréthane) | 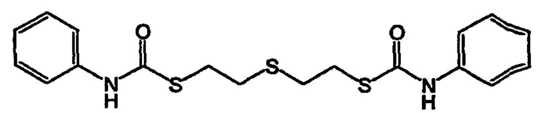 | 25,1 | 1,733 |
| ch-ch-dtodu | cyclohexyl-cyclohexyl-(dithiaoctane diuréthane) | 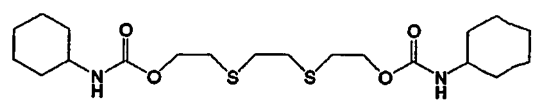 | 22,0 | 1,578 |

(suite)

| Abbréviation | Nom | Formule | $\delta_a$ MPa$^{1/2}$ | $n_{GD}$ |
|---|---|---|---|---|
| p-p-dtodu | phényl-phényl-(dithiaoctane diuréthane) | 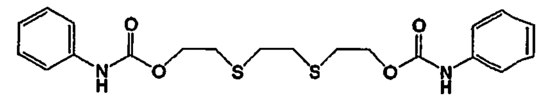 | 24,1 | 1,688 |
| chp-chp-ndu | cyclohexylpropyl-cyclohexylpropyl diméthyl norbornane diuréthane | 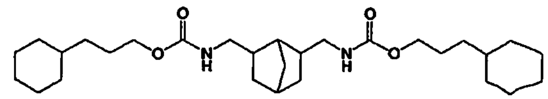 | 20,5 | 1,546 |
| che-che-ndu | cyclohexyléthyl-cyclohexyléthyl diméthyl norbornane diuréthane | 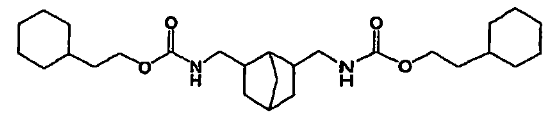 | 20,7 | 1,551 |
| pe-pe-ndu | propoxyéthyl-propoxyéthyl diméthyl norbornane diuréthane | 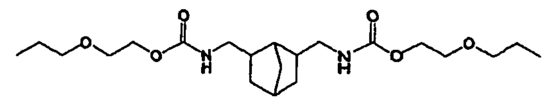 | 20,7 | 1,532 |
| nm-nm-ndu | norbornaneméthyl-norbornaneméthyl diméthyl norbornane diuréthane | 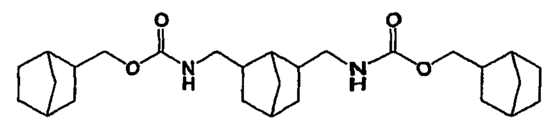 | 21,4 | 1,589 |
| pp-pp-ndu | phénylpropyl-phénylpropyl-diméthylnorbornaned iuréthane | 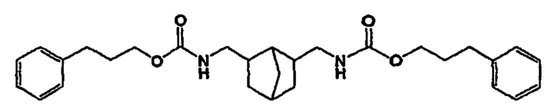 | 22,0 | 1,610 |
| ch-ch-tdedu | cyclohexyl-cyclohexyl-(thiodiéthane diuréthane) | 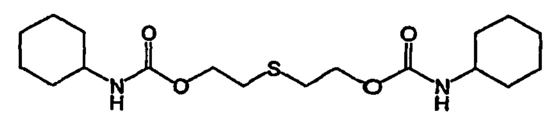 | 21,8 | 1,563 |

(suite)

| Abréviation | Nom | Formule | $\delta_a$ $MPa^{1/2}$ | $n_{GD}$ |
|---|---|---|---|---|
| p-p-tdedu | phényl-phényl-(thiodiéthane diuréthane) | 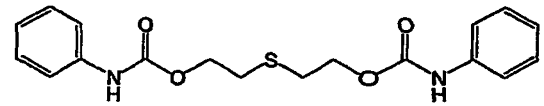 | 24,2 | 1,689 |

Les paramètres de solubilité des additifs ont été calculés comme indiqué précédemment et l'indice de réfraction a été estimé selon la méthode de Blackstone et Dale (1858) : $n_{GD}$= 1 + $R_{GD}$ / V.

R = $\Sigma_i$ Ri, Ri étant défini pour chaque groupe constitutif de la molécule (Van Krevelen, D.W., Properties of Polymers, Elsevier (1990) ; V désigne le volume molaire.

Les additifs synthétisés ont été synthétisés à partir de thiols ou d'alcools et d'isocyanates dans les proportions molaires requises.

Quand cela est possible, la réaction est effectuée en masse à chaud.

Lorsque la température de fusion du composé final nécessite une trop grande température de chauffe pour rester à l'état liquide, on a préféré une voie en solvant avec une étape d'évaporation.

Les additifs antiplastifiants convenant pour la présente invention peuvent également être choisis parmi les composés de formules suivantes :

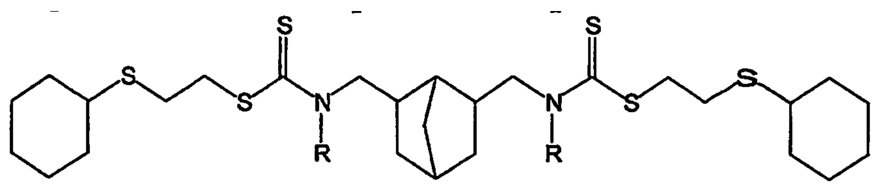

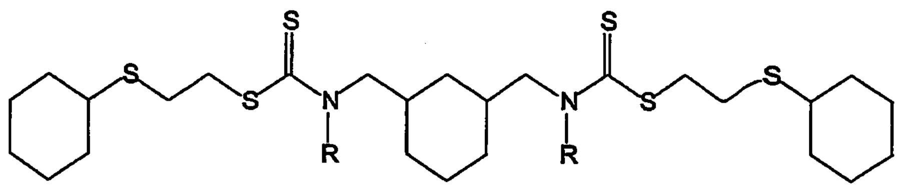

où R représente H, un groupe alkyle, en particulier, un groupe méthyle, éthyle, n-propyle ou n-butyle, ou un groupe aryle, en particulier un groupe phényle, ou leurs isomères de formule :

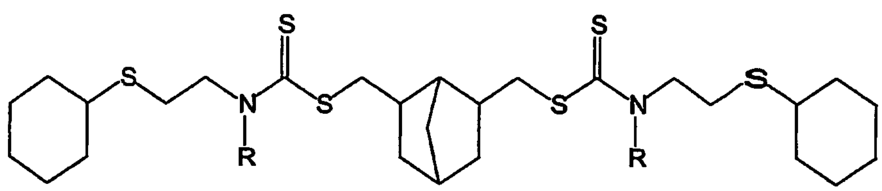

ou

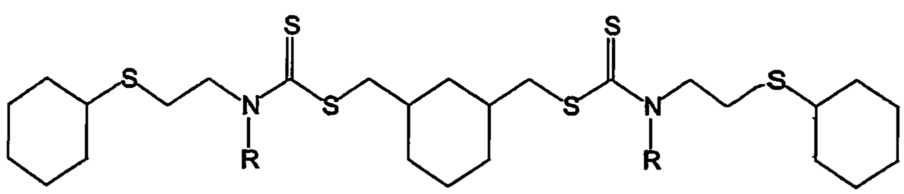

où R représente H, un groupe alkyle, en particulier, un groupe méthyle, éthyle, n-propyle ou n-butyle, ou un groupe aryle, en particulier un groupe phényle.

A titre d'exemple, la préparation du carbamate de [bicyclo[2.2.1]heptane-2,6 (et 2,5)-diylbis(méthylène)] bis[(2-éthandiyl)thio]cyclohexyl sulfure est décrite ci-dessous.

On ajoute goutte à goutte une solution de disulfure de carbone (25,04g ; 0,329 mol , 19,8 mL) et de chloroforme sec (120 mL) à une solution refroidie à -5°C de bicyclo[2.2.1]heptane-2,6 (et 2,5)-diméthanamine (23,10g; 0,150 mol ; International Resources), de triéthylamine (30,26g ; 0,300 moles, 4,16 mL) et de chloroforme sec (240mL), sous azote. Le mélange est à nouveau refroidi à -5°C et l'on ajoute goutte à goutte une solution de [(2-bromoéthyl)thio]cyclohexane (67,16g ; 0,300 mole) dans du chloroforme sec (120 mL). Le mélange réactionnel résultant est ensuite réchauffé à

température ambiante, puis maintenu sous agitation à température pendant 18 heures.

Le mélange réactionnel est ensuite concentré sous vide et le résidu est dissout dans de l'acétate d'éthyle, et lavé avec de l'acide chlorhydrique aqueux (1,0 M) puis par de l'eau. La phase éthyl acétate est séparée, séchée et soumise à évaporation pour former du carbamate de[bicyclo[2.2.1]heptane-2,6 (et 2,5)-diylbis(méthylène)]bis[(2-éthandiyl)thio]cyclohexyl sulfure sous forme d'huile visqueuse jaune pâle. (88,39g ; rendement 99,6%)

A titre d'exemple, la préparation du carbamate de [1,3-cyclohexanediylbis(méthylène)]bis[(2-éthandiyl)thio] cyclohexyl sulfure est décrite ci-dessous.

On ajoute goutte à goutte une solution de disulfure de carbone (11,76g; 0,155moles, 19,6 mL) et de chloroforme sec (120 mL) à une solution refroidie à -5°C de 1,3-bis(aminoéthyl)cyclohexane (10,03g ; 0,155 mol), de triéthylamine (14,23g; 0,141 moles, 19,6 mL) et de chloroforme sec (120mL), sous azote. Le mélange réactionnel résultant est réchauffé à température ambiante pendant une heure puis maintenu sous agitation pendant 1 heure.

Le mélange réactionnel est ensuite refroidi à (-5°C) et traité goutte à goutte avec une solution de sulfure de[(2-bromo éthyl)thio]cyclohexane (34,5g; 0,155 moles) dans du chloroforme sec (60,0 mL). Le mélange réactionnel est ensuite réchauffé à température ambiante puis maintenu sous agitation pendant 18 heures.

Le mélange réactionnel est ensuite concentré sous vide et le résidu est dissout dans de l'acétate d'éthyle, et lavé avec de l'acide chlorhydrique aqueux (1,0 M) puis par de l'eau. La phase organique est séparée, séchée et soumise à évaporation pour conduire à du carbamate de [1,3-cyclohexanediylbis(méthylène)]bis[(2-éthandiyl)thio]cyclohexyl sulfure sous forme d'huile visqueuse jaune pâle. (35,32g ; rendement 86,8%)

A titre d'exemple, on va maintenant décrire la préparation de l'additif cyclohexylpropyl cyclohexypropyldiméthylnorbornane diuréthane (chp-chp-ndu).

- Composés

| Nom | masse (g) | nombre de moles (mmol) |
|---|---|---|
| Cyclohexyl propanol (chp) | 11,60 | 81,6 |
| Diméthylnorbornyle diisocyanate (NDI) | 8,40 | 40,7 |
| Catalyseur (dibutyl dichlorure d'étain) | 0,002 | 0.01% massique |

<u>Mode opératoire</u>

On mélange le cyclohexylpropanol, le diméthylnorbornylediisocyanate et le catalyseur. On chauffe à 70°C et on suit la disparition du pic caractéristique du diisocyanate en spectroscopie infrarouge (durée typique de 2 heures). On arrête le chauffage et on conditionne le produit sous atmosphère inerte ($N_2$ ou AR).

Généralement, l'agent antiplastifiant représente de 5 à 25% massique par rapport à la masse totale de la matrice polythiouréthane et mieux de 5 à 15% massique.

Comme indiqué précédemment, le matériau plastique thermodur selon l'invention comprend une matrice tridimensionnelle comprenant des atomes de soufre.

Préférentiellement, il s'agit d'une matrice de polythiouréthane.

Un autre matériau plastique thermodur préféré est un polymère obtenu par polymérisation d'une composition comprenant au moins un polyépisulfure, préfentiellement un diépisulfure.

La matrice tridimensionnelle de polythiouréthane est obtenue par polyaddition d'au moins un polyisocyanate, de préférence un diisocyanate, et d'au moins un polythiol, de préférence un tri ou tétrathiol.

Les polyisocyanates sont généralement les polyiisocyanates aromatiques, les polyisocyanates aliphatiques et cycloaliphatiques et leurs mélanges.

De préférence, on utilisera des di ou triisocyanates et mieux des diisocyanates.

Parmi les polyisocyanates aromatiques, on peut citer le phénylène diisocyanate, l'éthylphénylène diisocyanate, l'isopropylphénylène diisocyanate, le diméthylphénylène diisocyanate, le diéthylphénylène diisocyanate, le diisopropylphénylène diisocyanate, le triméthylbenzyl triisocyanate, le xylylène diisocyanate (XDI), le benzyl triisocyanate, le 4,4'-diphénylméthanediisocyanate et l'isophorone diisocyanate.

Parmi les polyiisocyanates aliphatiques, on peut citer l'hexaméthylène diisocyanate.

Parmi les polyiisocyanates cycloaliphatiques, on peut citer le bis(isocyanate)méthyle cyclohexane, le dicyclohexyle méthane diisocyanate, le diméthyl norbornyle diisocyanate (NDI) et le norbornyle méthyle diisocyanate.

Bien évidemment, on peut utiliser des mélanges de ces diisocyanates. Le mélange de diisocyanates préféré est un mélange de xylylène diisocyanate (XDI) et de diméthyl norbornyle diisocyanate (NDI), en particulier un mélange 50/50 massique.

Les monomères polythiols peuvent être représentés par la formule :

$R'(SH)_{n'}$

où R' est un groupe organique de valence égale à n' ; et n' est un entier de 2 à 6, de préférence de 3 à 4.

Une classe préférée de polythiols sont les polythiols de formule :

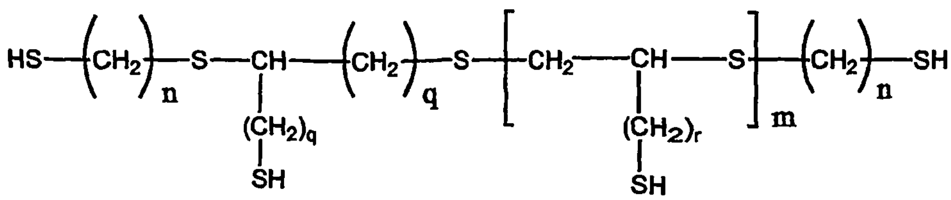

où n est un entier de 1 à 4, de préférence égal à 2, p, q et r sont des entiers de 1 à 4, de préférence égaux à 1, et m est un entier égal à 1 ou 2.

Parmi les monomères polythiols préférés, on peut citer les polythiols aliphatiques tels que le penthaérythritol tétrakis mercaptopropionate, le 1-(1'-mercaptoéthylthio)-2,3-dimercaptopropane, le 1-(2'mercaptopropylthio)-2,3-dimercaptopropane, le 1-(3'-mercaptopropylthio)-2,3-dimercaptopropane, le 1-(4'-mercaptobutylethio)-2,3-dimercaptopropane, le 1-(5'-mercaptopenthylthio)-2,3-dimercaptopropane, le 1-(6'-mercpatohexylthio)-2,3-dimercaptopropane, le 1,2-bis(4'-mercaptobutylthio)-3,mercaptopropane, le 1,2-bis(6'-mercaptohexyl)-3-mercaptopropane, le 1,2,3-tris(mercaptométhylthio)propane, le 1,2,3-tris(3'-mercaptopropylthio)propane, le 1,2,3-tris(2'-mercaptoéthylfhio)propane, le 1,2,3-tris-(4'-mercaptobutylthio)propane, le 1,2,3-tris(6'-mercaptohexylthio)propane, le 1,6-hexanethiol-1,2,3-propanetritiol et le 1,2-bis(2'-mercaptoéthylthio)-3-mercaptopropane.

Les polythiols préférés sont le 3-(2-sulfanyléthylthio)-2-(2-sulfanyléthylthio)propane-1-thiol de formule :

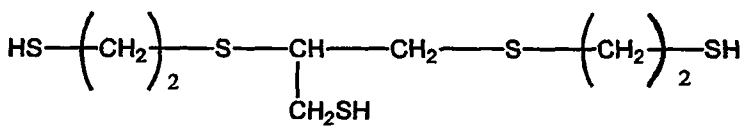

(3SH)

et le tétrathiol de formule :

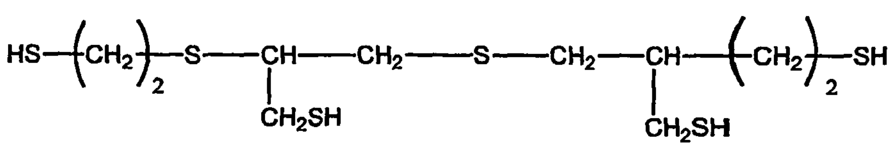

(4SH)

Les matrices polythiouréthanes selon l'invention peuvent être également préparées à partir de prépolymères polythiouréthanes à groupes terminaux isocyanates et thiols.

Les prépolymères à groupes terminaux isocyanates préférés ont une masse molaire moyenne en nombre de 1000 à 2000, de préférence de 1300 à 1700, et un rapport NCO/SH de 4 : 1 à 30 :1, de préférence 6 :1 ou plus et typiquement de 8 :1.

Les polythiouréthanes à groupes terminaux SH ont de préférence une masse moléculaire moyenne en nombre de 200 à 300 et un rapport SH/NCO de 4 :1 à 30 :1, de préférence 6 :1 ou plus et typiquement de 8 :1.

On peut utiliser tout catalyseur classique pour catalyser la réaction de polyaddition des polyisocyanates et polythiols pour former les matrices polythiouréthanes selon l'invention. Parmi ces catalyseurs, on peut citer les amines tertiaires, telles que la triéthylamine, les composés organométalliques tels que le dilaurate de diméhtyléthain, le dilaurate de dibutylétain et le dichlorure de dibutylétain, les sels de métaux alcalins, métaux alcalino terreux, métaux de transition et les sels d'ammonium d'acides satisfaisant à la condition $0,5 \leq pKa \leq 14$.

On peut également utiliser des co-catalyseurs ou promoteurs tels que la N,N-diméthylcyclohexylamine et le 1,4-dioza-bicyclo-[2, 2, 2]-octane pour accroître l'activité du catalyseur.

Parmi les sels de métaux alcalins, on peut citer en particulier KSCN éventuellement mélangé avec un composé électro-donneur, tel qu'un composé acétonitrile, amine, sulfone, sulfoxyde, triarysulfoxyde, nitro, éthylèneglycol éther, éther couronne et cryptate. Les composés électro-donneurs préférés sont les éthers couronnes et les cryptates.

Par ailleurs, la réaction de polyaddition pour la formation de la matrice de polythiouréthane est bien connue de l'homme du métier et s'effectue dans des conditions classiques.

La présente invention concerne également une lentille ophtalmique comprenant un matériau plastique thermodur, optiquement transparent, comprenant une matrice polymère tridimensionnelle dont le module de perte (E") présente une transition vitreuse secondaire (β), et au moins un additif antiplastifiant, ayant également de préférence un effet amortissant.

De préférence, le matériau thermodur de la lentille présente une nanoséparation de phase, telle que définie précédemment.

Comme indiqué, la matrice peut être toute matrice polymère tridimensionnelle transparente dont le module de perte (E") présente une transition vitreuse secondaire (β).

Parmi les matrices polymères tridimensionnelles, on peut citer les matrices tridimensionnelles comportant des atomes de S et notamment les matrices polythiouréthanes décrites ci-dessus, et des matrices obtenues par polymérisation d'au moins un polyépisulfure, en particulier un diépisulfure.

Les additifs antiplastifiants peuvent être choisis parmi les additifs décrits précédemment en tenant compte des conditions mentionnées également précédemment et dans les quantités indiquées.

Bien évidemment, le choix de l'antiplastifiant dépendra de la nature de la matrice et doit être tel qu'il conduise à un matériau final transparent.

En général, les matériaux thermodurs des lentilles ophtalmiques selon l'invention sont des matériaux ayant un indice de réfraction $(n_D^{25})$ élevé, c'est-à-dire un indice d'au moins 1,54, mieux de 1,60 ou plus et de préférence de 1,65 ou plus.

La suite de la description se réfère aux figures annexées qui représentent, respectivement :

Figure 1 des graphes des modules de conservation E' et de perte E" par analyse mécanique dynamique (DMA) d'une matrice polythiouréthane pure XDI/50NDI/4SH et d'une matrice polythiouréthane antiplastifiée selon l'invention ;

Figures 2 et 3 des graphes de l'évolution du module de conservation E' en fonction de la température pour une matrice polythiouréthane pure et de cette matrice antiplastifiée selon l'invention avec des taux croissants d'antiplastifiants pp-ch-u ;

Figure 4 : un graphe des temps de gel de la matrice XDI/OONDI/3SH à 60°C, en fonction du taux de catalyseur ;

Figure 5 : un graphe des cycles standards et courts (départ 60°C) utilisés pour une réaction de polyaddition ; et

Figure 6 : un schéma montrant la géométrie de l'éprouvette de flexion 3 points utilisée dans les essais de fracture.

Les exemples suivants illustrent la présente invention.

<u>Nomenclature</u>

Dans les exemples suivants, on a utilisé la nomenclature suivante pour désigner les matrices : toutes les matrices sont nommées à partir d'une matrice de base formée uniquement à partir de xylylène diisocyanate et de 3SH dans les proportions molaires 1eq de NCO pour 1eq de SH (massiques NCO 52%, SH 48%) et que l'on désigne par : XDI/00NDI/3SH,

Les autres matrices sont désignées en indiquant la proportion massique de NDI qui remplace en partie le XDI et le remplacement du polythiol 3SH par le polythiol 4SH. Ainsi, la matrice dénommée XDI/50NDI/4SH est une matrice analogue à la matrice de base mais pour laquelle on a remplacé 50 pour cent massique de XDI par 50 pour cent massique de NDI et le polythiol 3SH est remplacé par le polythiol 4SH (moles de SH éq.).

La nomenclature utilisée pour désigner des composés avec l'additif antiplastifiant est la suivante :

Polymère + 1/N additif (X%) où polymère est l'abréviation désignant la matrice. Additif est l'abréviation désignant l'additif.

1/N est une fraction désignant le nombre de points de réticulation pour une molécule d'additif.

X désigne le pourcentage massique d'additifs.

Exemple : XDI/00NDI/3SH + 1/6dbs ( 6,17%) : la matrice est la matrice de base avec du XDI sans NDI et du 3SH à laquelle on a ajouté du sulfure de dibenzyle (dbs), à raison de 1 mole d'additif pour 6 points de réticulation, ce qui correspond à 6,17% massique.

Formulations

Les matrices des formulations contenant les différents additifs à différentes concentrations (jusqu'à 20% en masse) ont été préparées à partir des produits de départ suivants :

| Nom du composé | Formule | $\delta_{mo}$ (MPa$^{1/2}$) |
|---|---|---|
| Xylylène diisocyanate (XDI) | 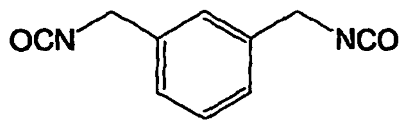 | 25,3 |
| Diméthyl Norbornyl diisocyanate (NDI) | 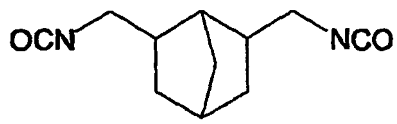 | 23,4 |
| Trithiol (3SH) | 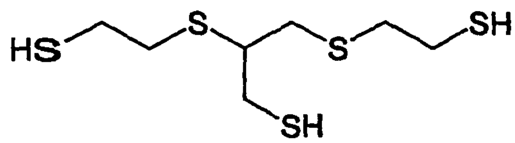 | 22,7 |
| Tétrathiol (4SH) | 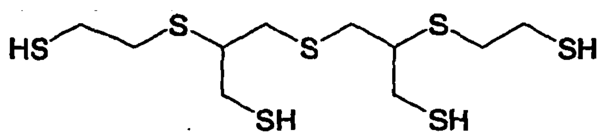 | 23,1 |

Les matrices polythiouréthanes utilisées sont :

| Composé | $\delta_{ma}$ (MPa$^{1/2}$) |
|---|---|
| XDI/00NDI/3SH | 26,9 |
| XDI/50NDI/4SH | 26,3 |

Mode opératoire général

Afin de dissoudre les additifs dans les monomères, un chauffage était souvent nécessaire (jusqu'à 120°C pour certains additifs). Mis à part le paramètre de solubilité, la température de fusion des additifs (ou leur température de transition vitreuse Tg, mesurée par calorimétrie différentielle à balayage (DSC), après trempe) influe sur la solubilité des additifs. La solubilité sera d'autant plus grande que $\delta_a$ et $T_f$ (température de fusion de l'additif, mesurée par DSC) ou Tg sont faibles.

L'isocyanate s'avérant bien meilleur solvant que les thiols, et afin de pouvoir laisser le temps à l'additif de se dissoudre sans que la formulation prenne en masse,
les formulations ont suivi le mode opératoire suivant :

1. Mélange de l'additif et de l'isocyanate, chauffage si nécessaire.
2. Ajout du thiol, mélange.
3. Optimisation de la température de solubilisation.
4. Dégazage à chaud.
5. Ajout du catalyseur et du démoulant interne, dégazage rapide.
6. Remplissage et début de cycle de polymérisation.

Les premiers essais ont été effectués avec la matrice XDI/00NDI/3SH. Cependant, la température de transition vitreuse de la matrice pure est déjà relativement basse pour l'application ophtalmique. La présence d'additif entraînant une baisse de la température de transition vitreuse, l'utilisation de la matrice XDI/50NDI/4SH (dont la $T_g$ est de 20°C supérieure à XDI/00NDI/3SH) a par la suite été préférée.

Exemple détaillé de formulation

Formulation avec un additif: XDI/50NDI/4SH + 14% chp-chp-ndu

| Nom | Masse (g) | Nombre de moles (mmol) |
|---|---|---|
| xylylène diisocyanate (xdi) | 4,03 | 21,4 |
| diméthylnorbornyle diisocyanate (ndi) | 4,03 | 19,6 |
| tétrathiol (4sh) | 7,94 | 20,5 |
| démoulant interne (Zelec UN) | 0,02 | 0,1% massique |
| catalyseur (dibutyl dichlorure d'étain) | 0,02 | 0,1% massique |
| additif chp-chp-ndu | 2,56 | 14% massique |

Ajouter l'additif au mélange d'isocyanate (XDI + NDI).
Chauffer à 60˚C et agiter pour dissoudre l'additif.
Quand l'additif est dissout, laisser refroidir à température ambiante ($T_{amb}$).
Ajouter le thiol (4SH).
Mélanger à $T_{amb}$, puis dégazer sous vide pendant environ 45min pour éliminer les bulles.
Ajouter le démoulant et le catalyseur. Agiter.
Filtrer la formulation (filtre 1,2μm).
Dégazer sous vide pendant 10 minutes.
Chauffer la formulation à 60˚C en agitant pendant 5minutes.
Remplir les moules préalablement préchauffés à 60˚C.
Mettre les moules à l'étuve, démarrer le cycle : 2h de montée de 60˚C à 120˚C ; 2h de palier à 120˚C ; 2h de descente de 120˚ à 50˚C. Attente à 50˚C.

Désassembler les moules.

Les formulations et résultats sont donnés dans les tableaux I, II et III ci-dessous :

**TABLEAU I**

**Formulations dans la matrice XDI/50NDI/4SH**

| Additifs | δ ($MPa^{1/2}$) | n théorique | Taux (%) | Aspect | Importance de l'antiplastification | Détection d'une nouvelle phase en DMA - | $T_g$ (max tan δ) °C | E' 25°C MPa | E' 100°C MPa | **$G_{Ic}$** ($kJ.m^{-2}$) | $K_{Ic}$ $MPa.m^{1/2}$ |
|---|---|---|---|---|---|---|---|---|---|---|---|
| ***Matrice pure*** | - | - | - | - | - | - | 115 | 4380 | 1870 | 0,12 | 0,64 |
| dbs | 21,7 | 1,632 | 12 | transparent, surface irrégulière | - | - | - | - | - | - | - |
| bptm | 23,0 | 1,689 | 20 | transparent, ssurface irrégulière | moyenne | - | 78 | 3320 | 15 | - | - |
| chp-ch-u | 19,7 | 1,509 | 8 | Diffuse un peu | moyenne | Non | 106 | 4200 | 150 | 0,15 | 0,67 |
| pp-ch-u | 20,9 | 1,558 | 8 | Transparent | moyenne | Non | 98 | *4450* | 72 | - | - |
| | | | 10 | Transparent | forte | Non | 86 | *4440* | 45 | 0.14 | 0,73 |
| pp-p-u | 22,4 | 1,634 | 8 | Transparent | moyenne | Non | 96 | *4590* | 44 | - | - |
| | | | 10 | Transparent | forte | Non | 86 | 4600 | 21 | 0,15 | 0,72 - |
| chp-chp-xdu | 21,1 | 1,566 | 10 | Diffuse très peu | moyenne | Non | 104 | 4330 | 170 | - | - |
| | | | 17 | Très diffusant | forte | Oui | 100 | 3630 | 58 | 0,24 | 0,86 - |
| che-che-xdu | 21,4 | 1,573 | 16 | Transparent | forte | Non | 95 | 4100 | 29 | - | - |
| pe-pe-xdu | 21,5 | 1,556 | 5 | Transparent | moyenne | Non | 96 | 4490 | 45 | - | - |
| | | | 21 | Transparent | moyenne | Non | 70 | 4190 | 16 | 0,29 | 0,96 |
| nm-nm-xdu | 22,3 | 1,615 | 19 | Transparent | moyenne | Non | 96 | 4390 | 27 | - | - |

(suite)

**TABLEAU I**

**Formulations dans la matrice XDI/50NDI/4SH**

| Additifs | δ ($MPa^{1/2}$) | n théorique | Taux (%) | Aspect | Importance de l'antiplastification | Détection d'une nouvelle phase en DMA - | $T_g$ (max tan δ) °C | E' 25°C MPa | E' 100°C MPa | $G_{Ic}$ ($kJ.m^{-2}$) | $K_{Ic}$ $MPa.m^{1/2}$ |
|---|---|---|---|---|---|---|---|---|---|---|---|
| pp-pp-xdu | 22,8 | 1,637 | 19 | Transparent | moyenne | Non | 88 | 4300 | 17 | - | - |
| chp-chp-ndu | 20,5 | 1,546 | 10 | Diffuse très peu | moyenne | Non | 105 | 4150 | 170 | - | - |
| | | | 14 | Diffuse un peu | moyenne | Oui | 104 | 3850 | 77 | 0,43 | 1,15 |
| | | | 18 | Opaque | moyenne | Oui, très net | 104 | 3110 | 157 | 1,76 | 1,82 |
| che-che-ndu | 20,7 | 1,551 | 17 | Diffuse un peu | forte | Non | 96 | 4000 | 22 | - | - |
| | | | 23 | Transparent, surface irrégulière | moyenne | Oui, très net | 96 | 3530 | 25 | - | - |
| pe-pe-ndu | 20,7 | 1,532 | 5 | Transparent | forte | Non | 98 | 4330 | 47 | - | - |
| | | | 21 | Transparent | moyenne | Non | 78 | 4390 | 15 | 0,18 | 0,73 |
| nm-nm-ndu | 21,4 | 1,589 | 10 | Transparent | moyenne | Non | 102 | 4190 | 92 | - | - |
| | | | 19 | Diffuse un peu | forte | Non | 100 | 4190 | 36 | 0,15 | 0,71 |
| pp-pp-ndu | 22 | 1,610 | 20 | Transparent | forte | Non | 88 | 4390 | 17 | - | - |
| ch-ch-tdedu | 0,8 | 1,563 | 10 | transparent, un peu jaune | moyenne | Oui | 102 | 4110 | 99 | 0,17 | 0,76 |

(suite)

**TABLEAU I**

**Formulations dans la matrice XDI/50NDI/4SH**

| Additifs | $\delta$ ($MPa^{1/2}$) | n théorique | Taux (%) | Aspect | Importance de l'antiplastification | Détection d'une nouvelle phase en DMA - | $T_g$ (max tan $\delta$) °C | E' 25°C MPa | E' 100°C MPa | $G_{Ic}$ ($kJ.m^{-2}$) | $K_{Ic}$ $MPa.m^{1/2}$ |
|---|---|---|---|---|---|---|---|---|---|---|---|
| p-p-tdedu | 24,2 | 1,689 | 10 | transparent, un peu jaune | forte | Non | 99 | 4620 | 55 | - | - |
| | | | 16 | Transparent, jaune | forte | Non | 92 | 4700 | 23 | - | - |
| ch-ch-tdedSu | 22,8 | 1,606 | 6 | très diffusant | faible | Non | 104 | 4430 | 108 | - | - |
| p-p-tdedSu | 25,1 | 1,733 | 6 | très diffusant | très faible | Non | 108 | 4240 | 203 | - | - |
| ch-ch-dtodu | 22,0 | 1,578 | 16 | Diffuse un peu | moyenne | Non | 92 | 4360 | 26 | - | - |
| p-p-dtodu | 24,1 | 1,688 | 16 | Diffuse un peu | forte | Non | 88 | 4270 | 14 | - | - |

- pas de mesure effectuée

**TABLEAU II**

**Formulations dans la matrice XDI/00NDI/3SH**

| Additifs | δ ($MPa^{1/2}$) | n théorique | Taux (%) | Aspect | Importance de l'antiplastification | Détection d'une nouvelle phase en DMA | $T_g$ (max tan δ °C | E' 25°C MPa | E' 100°C MPa | $G_{Ic}$ ($kJ.m^{-2}$) | $K_{Ic}$ $MPa.m^{1/2}$ |
|---|---|---|---|---|---|---|---|---|---|---|---|
| ***matrice pure*** | - | - | - | - | - | Non | 94 | 4580 | 20 | 0,19 | ***0,80*** |
| dbs | 21,7 | 1,632 | 6 | Transparent | Moyenne | Non | 76 | 4610 | 17 | 0,21 | 0,84 |
| | | | 9 | Surface irrégulière | Forte | Non | 72 | 4450 | 17 | - | - |
| | | | 21 | Opaque | - | Non | - | - | - | - | - |
| chp-ch-u | 19,7 | 1,509 | 3 | Transparent | très faible | Non | 90 | 4550 | 19 | 0,15 | 0,73 |
| pp-ch-u | 20,9 | 1,558 | 6 | Transparent | moyenne | Non | 82 | 4100 | 15 | - | - |
| | | | 11 | Transparent | moyenne | Non | 74 | 4590 | 15 | 0,22 | 0,88 |
| | | | 19 | Surface irrégulière | moyenne | Non | 64 | 4000 | 12 | - | - |
| pp-p-u | 22,4 | 1,634 | 6 | Transparent | forte | Non | 82 | 4440 | 16 | - | - |
| | | | 11 | Transparent | forte | Non | 74 | 4840 | 16 | 0,24 | 0,89 |
| pe-pe-xdu | 21,5 | 1,556 | 5 | Transparent | nulle | Non | 84 | 4630 | 17 | - | - |
| | | | 20 | Surface irrégulière | forte | Non | 66 | 4020 | 7 | - | - |
| nm-nm-xdu | 22,3 | 1,615 | 9 | Transparent | faible | Non | 84 | 4600 | 15 | - | - |
| chp-chp-ndu | 20,5 | 1,546 | 5 | Surface irrégulière | faible | Non | 90 | 4370 | 17 | - | - |
| pe-pe-ndu | 20,7 | 1,532 | 5 | Transparent | nulle | Non | 88 | 4350 | 16 | - | - |
| | | | 20 | Transparent | moyenne | Non | 62 | 4490 | 12 | - | - |

**TABLEAU III**

**Comparaison: Prépolymères/Monomères**

**Matrice: XDI/50NDI/4SH**

| Additifs | δ ($MPa^{1/2}$) | n théorique | Taux (%) | Type de formulation | Aspect | Importance de l'antiplastification | Détection d'une nouvelle phase en DMA | $T_g$ (max tan δ) °C | E' 25°C MPa | E' 100°C MPa |
|---|---|---|---|---|---|---|---|---|---|---|
| chp-ch-u | 19,7 | 1,509 | 8 | Monomères | diffuse un peu | moyenne | Non | 106 | 4200 | 150 |
| | | | 15 | Prépolymères | transparent, surface irrégulière | faible | Non | 92 | 3820 | 22 |
| chp-chp-ndu | 20,5 | 1,546 | 14 | Monomères | diffuse un peu | moyenne | Oui | 104 | 3850 | 77 |
| | | | | Prépolymères | diffuse très peu | moyenne | Oui, très net | 106 | 3720 | 100 |
| | | | 18 | Monomères | opaque | moyenne | Oui, très net | 104 | 3110 | 157 |
| | | | | Prépolymères | très diffusant | forte | Oui, très net | 108 | 3070 | 150 |
| che-che-ndu | 20,7 | 1,551 | 17 | Monomères | diffuse un peu | forte | Non | 96 | 4000 | 22 |
| | | | | Prépolymères | diffuse un peu | forte | Non | 94 | 3970 | 28 |
| | | | 23 | Monomères | transparent, surface irrégulière | moyenne | Oui, très net | 96 | 3530 | 25 |
| | | | | Prépolymères | diffuse un peu | forte | Oui, très net | 102 | 3320 | 50 |

(suite)

| Additifs | δ ($MPa^{1/2}$) | n théorique | Taux (%) | Type de formulation | Aspect | Importance de l'antiplastification | Détection d'une nouvelle phase en DMA | $T_g$ (max tan δ) °C | E' 25°C MPa | E' 100°C MPa |
|---|---|---|---|---|---|---|---|---|---|---|
| | | | | | | | | | | |
| | | | | | | | | | | |
| Importance de l'antiplastification | | | | | | | | | | |
| nulle : pas d'effet sur la transition β | | | | | | | | | | |
| faible : baisse peu importante de l'amplitude de la transition | | | | | | | | | | |
| moyenne : baisse significative (pic diminué environ de moitié) | | | | | | | | | | |
| forte : baisse importante, quasi-disparition du pic de transition | | | | | | | | | | |

Mise en évidence de l'antiplastification

Les échantillons préparés ont été analysés avec plusieurs moyens de mesures, afin de détecter l'antiplastification.

Caractérisation

Les mesures de viscoélasticité en DMA permettent de bien mettre en évidence l'antiplastification. En effet, l'atténuation de la transition β apparaît immédiatement sur le tracé de E"=f(T).

La méthode retenue pour sélectionner les additifs semble être bien en accord avec les résultats obtenus. L'importance du phénomène n'est par contre pas la même pour tous les composés. A taux constant, les additifs ayant la plus grande influence sont ceux aux paramètres de solubilité les plus élevés. Cela peut s'expliquer par une plus grande affinité pour les chaînes de la matrice, et ainsi un meilleur blocage des points de propagation des mouvements responsables de la transition β.

L'antiplastification ne se traduit donc pas forcément par une augmentation du module E'. En effet, lorsque l'effet antiplastifiant est faible, cela ne suffit pas à compenser la chute de module due à la présence de l'additif.

Les meilleurs systèmes augmentent le module E' de 0,6GPa au maximum, soit 15% d'augmentation par rapport au module de la matrice pure XDI/50NDI/4SH qui se situe autour de 4GPa comme le montre le tableau ci-après et la figure 1.

| Additif | δ ($MPa^{1/2}$) | Taux | Plage de températures antiplastifiée | Augmentation de E' au max |
|---|---|---|---|---|
| p-p-tdedu | 24.2 | 1/5 (15,9%) | 0°C - 70°C | 0,6GPa |
| mélange ch-ch-tdedu+ p-p-tdedu | 23.0 | 1/9 (9,6%) | 10°C - 80°C | 0,6GPa |
| pp-p-u | 21.9 | 1/4 (14,6%) | 0°C - 55°C | 0,4GPa |
| | | 1/8 (7,7%) | 10°C-70°C | 0,3GPa |
| dbs | 21.7 | 1/6 (8,6%) | 10°C-60°C | 0,2GPa |

Les autres additifs sont plus faiblement antiplastifiants, mais atténuent tous la transition β. Cela ne se traduit pas forcément par une augmentation du module, mais beaucoup parviennent néanmoins à compenser la chute de module autour de 30°C.

Lorsque le taux d'incorporation augmente, deux phénomènes s'opposent.

D'une part, le module dans la zone non antiplastifiée ainsi que la température de transition vitreuse sont abaissés par la présence d'une plus grande quantité d'additif. D'autre part, l'effet antiplastifiant dans la zone de la transition β est plus important.

La baisse supplémentaire du module de conservation peut donc être compensée par l'action antiplastifiante. Cependant, lorsque le taux d'additif augmente trop, cela n'est plus possible.

L'analyse des données relatives à l'additif pp-ch-u le montre dans la matrice XDI/50NDI/4SH (figures 2 et 3). C'est aux taux d'incorporation de 8 et 10% que le module de conservation est le plus augmenté par rapport à la matrice pure dans une zone de températures comprises entre 20°C et 60°C. A 15%, l'antiplastification compense juste la chute de module autour de 30°C. A 21% d'additif, la chute de module est trop importante pour pouvoir être compensée par l'antiplastification.

Transition vitreuse

La température de transition vitreuse des mélanges est abaissée par rapport à la matrice pure. Cela est dû à la présence de l'additif, qui plastifie le polymère.

Obtention de l'amortissement : séparation de phase

L'antiplastification est acquise avec la plupart des additifs, et la séparation de phase en cours de polymérisation a été clairement mise en évidence pour les additifs les plus aptes à engendrer cette séparation de phase.

Mise en évidence

La présence d'une deuxième phase peut être détectée de différentes manières.

Lorsque l'échelle caractéristique de la seconde phase est plus grande que la taille critique dépendant de la différence d'indice entre la matrice et l'additif, le matériau est diffusant et peut être jusqu'à opaque.

L'analyse mécanique dynamique (DMA) rend compte de cette séparation de phase par la présence d'un nouveau pic de transition vitreuse ($\mu$) sur le tracé du module de perte E". La proximité des transitions $\alpha$ et $\beta$ rend cependant difficile la mise en évidence d'un pic supplémentaire et nécessite souvent l'utilisation de données multifréquences.

En effet, les transitions vitreuses ($\alpha$ et $\mu$) sont moins sensibles à la fréquence que les transitions secondaires ($\beta$). Ainsi, si la nouvelle transition vitreuse ($\mu$) est superposée à la transition $\beta$ à une fréquence f, des mesures à $10\times f$ et à f / 10 permettent de les différencier. Dans le cas du système contenant 14% de chp-chp-ndu, il apparaît plus utile d'effectuer une mesure à haute fréquence.

D'autres méthodes de mesures, plus difficiles à mettre en oeuvre, pourraient permettre de mieux caractériser la séparation de phase :

- La RMN du solide donne accès aux mobilités moléculaires. La présence de deux phases donne lieu à deux distributions de temps de relaxation.
- La microscopie à force atomique (AFM) peut, dans certains cas, permettre de discerner une séparation de phase. La différence de module entre les éventuelles phases est néanmoins très faible.
- La microscopie électronique en transmission (MET) est la technique particulièrement recommandée qui permet de discerner les séparations de phase, qu'elles soient macroscopiques ou nanoscopiques, et ce grâce à un marquage à l'oxyde de ruthénium.

Outre les paramètres de solubilité des additifs, on peut jouer sur d'autres paramètres pour favoriser l'apparition de la séparation de phase.

Influence de la cinétique de formation du réseau

Afin d'éviter une démixtion de l'additif (apparition de domaines de tailles de l'ordre du mm ou plus, visibles à l'oeil nu, avec répartition hétérogène et rendant le matériau friable), les conditions de polymérisation peuvent être modifiées et la cinétique de formation du réseau accélérée.

Cinétique de polymérisation

Dans un premier temps, seuls les paramètres affectant la cinétique ont été modifiés, sans changer la structure des monomères.

Taux de catalyseur - Température

Des mesures de temps de gel ont été effectuées sur la matrice XDI/00NDI/3SH, à 60°C et avec différents taux de catalyseur. Le dispositif utilisé ('gel-timer') mesure le temps nécessaire au blocage du mouvement oscillatoire d'un poinçon dans la formulation.

Un suivi en spectroscopie infrarouge (IR) indique un point de gel autour de 60% de conversion, cohérent avec la valeur théorique donnée par la loi de Flory-Stockmayers :

$p_o = \dfrac{1}{\sqrt{f-1}}$ où $p_c$ est l'avancement au point de gel et f la fonctionnalité du composé multifonctionnel.

Les valeurs théoriques sont $p_c$=71% pour XDI/OONDI/3SH (f=3) et $p_c$=58% pour XDI/50NDI/4SH (f=4).

Le temps de gel suit une loi de puissance inverse en fonction du taux de catalyseur (figure 4). Ainsi, en utilisant 0,10% de catalyseur au lieu de 0.01 %, le temps de gel a été divisé par 15.

D'autre part, la température du milieu a un effet important sur la prise en gel : à 120°C et sans catalyseur, la formulation prend en gel en 2h30 contre plus de 24h à 60°C (Voir tableau ci-dessous).

| Temps de gel en fonction du taux de catalyseur, à 60˚C, matrice XDI/00NDI/2SH | | |
|---|---|---|
| Température | Taux de catalyseur (%) | Temps de gel |
| 120˚C | 0 | 2h30 |
| 60˚C | 0 | >24h |
| | 0,01 | 2h30 |
| | 0,02 | 1h15 |
| | 0,05 | 0h30 |
| | 0,10 | 0h10 |

Cycle de polymérisation

L'influence de la température sur la réaction de polymérisation peut être mise à profit en jouant sur la durée du cycle thermique. Plutôt qu'un long cycle de polymérisation (près de 20h pour parvenir à 120˚C), on préfère atteindre le point de gel plus rapidement par un cycle court, avec une rampe de 2h pour atteindre 120˚C, partant de la température de miscibilité de l'additif dans les monomères (exemple de départ de 60˚C sur la figure 5).

Utilisation de prépolymères

Afin d'accélérer la prise en gel, des prépolymères ont été synthétisés.
Les proportions sont les suivantes :

- Prépolymère à groupes terminaux isocyanate (NCO) : 1 fonction thiol (SH) pour 8 fonctions isocyanate (NCO).
- Prépolymère à groupes terminaux thiol (SH) : 1 fonction isocyanate (NCO) pour 8 fonctions thiol (SH).

La mise au point des prépolymères NCO nécessite des précautions particulières afin d'assurer la reproductibilité des résultats, notamment pour éviter d'éventuelles réaction de condensation des isocyanates en isocyanurates qui auraient pour conséquence d'ajouter des points de réticulation au système.
Une étude en chromatographie par perméation de gel (GPC) sur deux lots montre d'ailleurs un écart dans les distributions de masses du prépolymère NCO. Les masses indiquées dans le tableau ne prennent pas en compte les isocyanates libres résiduels, qui ont un volume d'élution trop proche du volume résiduel.
Le prépolymère SH nécessite moins de précautions, ce qui est confirmé par une bonne reproductibilité entre les deux lots analysés par GPC.

| Résultats de GPC, masses en équivalent polystyrène, pour 2 lots de prépolymères XDI/50NDI/4SH | | | |
|---|---|---|---|
| Echantillon | $M_n$ | $M_w$ | $I = \frac{M_w}{M_n}$ |
| Prépolymère NCO, lot 1 | 1633 | 9360 | 5,7 |
| Prépolymère NCO, lot 2 | 1435 | 3781 | 2,6 |
| Prépolymère SH, lot 1 | 250 | 1099 | 4,4 |
| Prépolymère SH, lot 2 | 262 | 1046 | 4,0 |
| ($M_n$ : Masse molaire moyenne en nombre ; $M_w$ : masse molaire moyenne en poids ; I : indice de polydispersité). | | | |

Des mesures de temps de gel indiquent que dans des conditions de réaction similaire (catalyseur, température), l'utilisation de prépolymères diminue le temps de gel d'un facteur deux, ce qui se révèle déjà intéressant pour l'accélération de la construction de la matrice.
En plus de l'utilisation des prépolymères, un autre système catalytique peut servir d'initiateur. Il est basé sur un complexe de l'isothiocyanate de potassium (KSCN) par un éther couronne. Dans ce cas, le temps de gel pour un mélange effectué à température ambiante est inférieur à 5min avec une forte exothermie (supérieure de 120˚C).

Préparation des prépolymères XDI/50NDI/4SH

Prépolymère isocyanate

Chacun des monomères isocyanates (XDI, NDI) est fractionné en deux parties respectivement XDI-1 et XDI-2, et NDI-1 et NDI-2. Chacune des fractions est ensuite mélangée selon le mode opératoire ci-dessous.

| Nom | Masse (g) | nombre de moles (mol) |
|---|---|---|
| XDI - 1 | 62,60 | 0,333 |
| NDI - 1 | 62,60 | 0,304 |
| 4SH | 27,43 | 0,071 |
| XDI - 2 | 48,69 | 0,259 |
| NDI - 2 | 48,69 | 0,236 |

Mélanger le thiol (4SH) au mélange d'isocyanate - 1 (XDI - 1 + NDI -1).
Chauffer à 118°C et agiter pendant 2h.
Ajouter le mélange d'isocyanates - 2 (XDI - 2 + NDI - 2).
Refroidir à Température ambiante.
Conserver sous atmosphère inerte ($N_2$, Ar).

Prépolymère thiol

| Nom | Masse (g) | Nombre de moles (mol) |
|---|---|---|
| 4SH - 1 | 166,40 | 0,429 |
| XDI | 14,07 | 0,075 |
| NDI | 14,07 | 0,068 |
| 4SH - 2 | 55,47 | 0,143 |

Le monomère thiol est fractionné en deux parties, chacune des masses différentes et identifiées 4SH-1 et 4SH-2.

Mélanger 4SH - 1 et les isocyanates (XDI+NDI).
Chauffer à 93°C et agiter pendant 4h.
Vérifier la disparition du pic NCO en spectroscopie IR.
Ajouter 4SH - 2 et refroidir à température ambiante.

Résultats

Grâce à l'accélération de la réaction de polymérisation, le point de gel est atteint plus rapidement. Il est ainsi possible d'éviter une démixtion avant le point de gel, et des matériaux plastiques thermodurs antiplastifiés comportant une séparation de phase ont pu être obtenus.
Par exemple, dans la matrice XDI/50NDI/4SH :

- chp-ch-u à un taux de 8% : démixe avec le cycle thermique long, est à peine diffusant par contrôle visuel avec le cycle court, indiquant une séparation de phase.
- ch-ch-tdedu à 10% : démixe avec 0.02% de catalyseur, est transparent avec 0.07%.
- chp-chp-ndu à 18% : est totalement opaque de façon homogène lorsque la formulation est effectuée avec les monomères, est très diffusant mais non opaque avec les prépolymères.

Analyse mécanique dynamique

Un nouveau pic n'a pas pu être mis en évidence pour tous les systèmes diffusants. Tous les échantillons n'ont cependant pas été mesurés à plusieurs fréquences pour décorréler d'éventuels pics superposés.

(Matrice XDI/50NDI/4SH)

| Additif | Taux à partir duquel le matériau est diffusant dans les conditions cinétiques les plus lentes | Signature DMA de la nouvelle transition |
|---|---|---|
| ch-ch-tdedu | 10% | OUI |
| chp-chp-ndu | 14% | OUI |
| chp-chp-xdu | 10% | OUI |
| che-che-ndu | 23% | OUI |
| che-che-xdu | 16% | NON |
| nm-nm-ndu | 19% | NON |
| Mélange ch-ch-tdedu + p-p-tdedu | 10% | NON |
| p-p-tdedSu | 6% | NON |
| ch-ch-tdedSu | 6% | NON |
| p-p-dtodu | 16% | NON |
| ch-ch-dtodu | 16% | NON |
| chp-ch-u | 8% | NON |

Lorsqu'il y a séparation de phase, l'effet antiplastifiant est plus faible et ne permet pas d'augmenter le module E' par rapport à la matrice pure. Cela est certainement dû à la plus faible interaction entre l'additif et la matrice, nécessaire à la séparation de phase.

En ce qui concerne l'additif chp-chp-ndu, la séparation de phase visible en DMA et donnant lieu à des lentilles diffusantes a également été caractérisée en microscopie électronique en transmission, avec des inclusions de 75nm.

L'additif chp-chp-ndu :

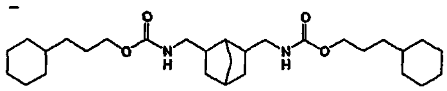

s'avère être particulièrement intéressant.

Il donne lieu à une séparation de phase visible en DMA avec des lentilles à peine diffusantes. L'utilisation du prépolymère et de son système catalytique peut se révéler intéressante pour parvenir à des matériaux transparents.

l'additif ch-ch-tdedu est également intéressant, car transparent avec une nanoséparation de phase mise en évidence par microscopie électronique en transmission (taille caractéristique des phases inférieure à 20 nm). Des mesures de ténacité ont été refaites à plusieurs taux d'incorporation et ont été regroupées dans le tableau de la section « mesures de ténacité ».

Ténacité

La ténacité de certaines formulations a été évaluée par fracture en flexion trois points dans des échantillons entaillés.

Mesures de ténacité

Critères de la mécanique de la fracture en élasticité linéaire

La mécanique de la fracture en élasticité linéaire s'applique aux matériaux obéissant à la loi de Hooke (proportionnalité entre contrainte appliquée et déformation) lors d'une sollicitation de l'éprouvette entaillée (mode I, ouverture de la fissure en tension, dans notre étude). Dans ce cadre, la mesure de deux grandeurs interdépendantes permet de caractériser la mécanique de la rupture :

- $G_{Ic}$ : énergie de rupture (énergie nécessaire pour initier la propagation de la fissure)
- $K_{Ic}$ : ténacité à rupture (résistance du matériau à l'initiation de fissure) avec $G_{Ic} = \frac{K_{Ic}^2}{E}$ en contrainte plane, et

$$G_{Ic} = \frac{K_{Ic}^2 \cdot (1 - \nu^2)}{E}$$ en déformation plane

Protocole expérimental

Les essais de fracture ont été réalisés en flexion 3 points sur un appareil Instron 4301 (mesures à 20°C - salle climatisée).

Les éprouvettes destinées aux essais de fracture sont représentées à la figure 6, ont été découpées, à partir de palets de 6 mm d'épaisseur, aux dimensions préconisées par Williams dans son protocole[1]. Dans un premier temps, les éprouvettes ont été pré-entaillées à l'aide d'une fraise d'épaisseur 0,5 mm, puis recuits à 120°C pendant 2 h. Enfin, une entaille aiguë a été réalisée à la lame de rasoir en fond de pré-entaille, grâce à un système de guillotine.

[1] Williams J.G., EGF Task Group on Polymers and Composites, A Linear Elastic Fracture Mechanics (LEFM) standard for determining $K_c$ and $G_c$ for plastics (1989)

Les critères relatifs à la géométrie des éprouvettes et à l'entaillage doivent être respectés strictement, afin de tester l'échantillon dans des conditions de fragilité maximum et de pouvoir appliquer les formules donnant accès à $K_{Ic}$ et $Q_{Ic}$.

Dans notre cas, B=6 mm, W=12 mm.

Calcul des grandeurs de rupture

$K_{Ic}$ est déterminé expérimentalement à partir de la formule suivante :

$$K_{Ic} = f(\alpha) \times \frac{\bar{P}_{max}}{BW^{1/2}}$$

où B et W sont respectivement l'épaisseur et la hauteur de l'échantillon.

a est la profondeur de l'entaille (entaille + pré-entaille).

$P_{max}$ est la force maximale enregistrée durant l'essai de rupture. $\alpha = \frac{a}{W}$.

f est un facteur géométrique égal pour un échantillon de cette géométrie à :

$$f(\alpha) = 6\,\alpha^{1/2}\,\frac{1{,}99 - \alpha(1-\alpha)(2{,}15 - 3{,}93\alpha + 2{,}7\alpha^2)}{(1-2\alpha)(1-\alpha)^{3/2}}$$

$G_{Ic}$ est déterminé expérimentalement par :

$$G_{Ic} = \frac{U_i}{B\,W\,\Phi(\alpha)}$$

où $U_i$ est l'aire sous la courbe force-déplacement jusqu'à $P_{max}$.
$\Phi$ est un facteur géométrique :

$$\Phi(\alpha) = \frac{\Theta + 18{,}64}{\frac{d\Theta}{d\alpha}}$$

avec

$$\begin{cases} \Theta(\alpha) = \frac{16\alpha^2}{(1-\alpha)^2}\left(8{,}9 - 33{,}717\alpha + 79{,}616\alpha^2 - 112{,}952\alpha^3 + 84{,}815\alpha^4 - 25{,}672\alpha^5\right) \\ \frac{d\Theta}{d\alpha}(\alpha) = \frac{16\alpha^2}{(1-\alpha)^2}\left(-33.717 + 159{,}232\alpha - 338{,}856\alpha^2 + 339{,}26\alpha^3 - 128{,}36\alpha^4\right) + \\ \qquad \frac{32\alpha}{(1-\alpha)^3}\left(8{,}9 - 33{,}717\alpha + 79{,}616\alpha^2 - 112{,}952\alpha^3 + 84{,}815\alpha^4 - 25{,}672\alpha^5\right) \end{cases}$$

Résultats de mesure

Ces résultats regroupent les résultats figurant dans le tableau I XDI/50NDI/4SH, sauf ceux comportant un astérisque.

| Echantillon | $T_g$ (max tan $\delta$) °C | Transition $\mu$ révélée en DMA | Matériau diffusant | $K_{Ic}$ (MPa.m$^{1/2}$) | $G_{Ic}$ (kJ.m$^{-2}$) |
|---|---|---|---|---|---|
| Matrice XDI/ 50NDI/4SH pure | 100 | - | - | 0,64 | 0,12 |
| 1/17 chp-ch-u (4%)* | 82 | non | Non | 0,67 | 0,15 |
| 1/8 chp-ch-u (8%) | 106 | non | Oui | 0,67 | 0,15 |
| 1/5 mn-mn-ndu (20%) | 100 | non | Oui | 0,71 | 0,15 |
| 1/6 pp-ch-u (10%) | 86 | non | Non | 0,73 | 0,14 |
| 1/2.5 pp-ch-u (21%)* | - | non | Non | 0,72 | 0,18 |
| 1/4 pe-pe-ndu (21%) | 78 | non | Non | 0,73 | 0,18 |
| 1/9 ch-ch-tdedu (10%) | 102 | oui | Non | 0,76 | 0,17 |
| 1/4 pe-pe-xdu (21%) | 70 | non | Non | 0,96 | 0,29 |
| 1/6 chp-chp-xdu (17%) | 100 | oui | Oui | 0,86 | 0,24 |
| 1/8 chp-chp-ndu (14%) | 104 | oui | Oui | 1,15 | 0,43 |
| 1/6 chp-chp-ndu (18%) | 104 | oui | Opaque | 1,82 | 1,76 |

(suite)

| Echantillon | $T_g$ (max tan δ) °C | Transition μ révélée en DMA | Matériau diffusant | $K_{Ic}$ ($MPa.m^{1/2}$) | $G_{Ic}$ ($kJ.m^{-2}$) |
|---|---|---|---|---|---|
| 1/9 ch-ch-tdedu (10%) | 102 | oui | non | 0,85 | 0,23 |
| 1/6 ch-ch-tdedu (14%)* | 97 | non | non | 0,90 | 0,20 |
| 1/4 ch-ch-tdedu (20%)* | 92 | non | non | 0,90 | 0,21 |

Les résultats mettent en évidence l'efficacité des additifs, en particulier de l'additif chp-chp-ndu, dans le renforcement du matériau. En particulier, ils montrent une augmentation du taux de restitution d'énergie $G_{Ic}$ par rapport à la matrice pure.

En ce qui concerne l'additif ch-ch-tdedu, à 10%, la transition μ se manifeste par un épaulement de la transition principale alpha. La transition μ n'est pas visible pour les taux d'incorporation élevées car les transitions alpha et bêta sont trop proches

Les matériaux contenant chp-chp-ndu, les plus prometteurs malgré la diffusion, ont ensuite été testés au choc.

Résistance au choc

On mesure l'énergie de rupture des lentilles conformément à la norme FDA de résistance aux chocs de verres ophtalmiques. Cet essai consiste à laisser tomber une bille de 16 g d'une hauteur de 127 cm au centre de la face convexe de la lentille, représentant une énergie de 200 mJ. Pour mesurer l'énergie de rupture des lentilles ophtalmiques, on fait tomber des billes d'énergie croissante au centre des lentilles jusqu'à étoilement ou cassure de celle-ci. On calcule ensuite l'énergie de rupture de la lentille.

Forme de l'échantillon : lentille concave, dioptrie -2, épaisseur centre : 1,55 mm.

Deux matériaux ont été testés :

- matrice pure XDI/50NDI/4SH
- matrice chargée avec 14% de chp-chp-ndu

La corrélation est bonne entre les résultats de ténacité et la résistance au choc, malgré une grande dispersion des résultats pour le matériau avec additif. La résistance au choc est donc accrue par la présence de l'additif.

| Echantillon | Energie de rupture | $K_{Ic}$ ($WPa.m^{½}$) | $G_{Ic}$ ($kJ.m^{-2}$) |
|---|---|---|---|
| Matrice XDI/50NDI/4SH | 2400mJ | 0,64 | 0,12 |
| XDI/50NDI/4SH + 14% chp-chp-ndu | 4300mJ (très dispersé) | 1,15 | 0,43 |

## Revendications

1. Matériau plastique thermodur, **caractérisé en ce qu'**il comprend une matrice tridimensionnelle comportant des atomes de S et au moins un additif antiplastifiant non réactif avec ladite matrice.

2. Matériau plastique thermodur selon la revendication 1, **caractérisé en ce que** la matrice tridimensionnelle est une matrice de polythiouréthane ou de polyépisulfure.

3. Matériau selon la revendication 1 ou 2, **caractérisé en ce que** l'antiplastification a lieu dans la gamme de température de 0 à 85°C.

4. Matériau selon l'une quelconque des revendications précédentes, **caractérisé en ce que** l'additif antiplastifiant a un paramètre de solubilité $\delta_a$ satisfaisant la relation :

$$\delta_{mo} - \delta_a < 5\ MPa^{1/2}$$

où $\delta_{mo}$ est le paramètrede solubilité des monomères polyisocyanates et polythiols utilisés pour former la matrice polythiouréthane.

**5.** Matériau selon l'une quelconque des revendications précédentes, **caractérisé en ce que** le paramètre de solubilité $\delta_a$ de l'additif antiplastifiant satisfait la relation :

$$\delta_{ma} - \delta_a > 4\ MPa^{1/2}$$

où $\delta_{ma}$ est le paramètre de solubilité de la matrice.

**6.** Matériau selon l'une quelconque des revendications précédentes, **caractérisé en ce que** le paramètre de solubilité de l'additif plastifiant satisfait la relation :

$$19 \leq \delta_a \leq 23.$$

**7.** Matériau selon l'une quelconque des revendications précédentes, **caractérisé en ce que** l'additif antiplastifiant est choisi parmi les sulfures de dialkyle, les sulfures de diaryle, les sulfures de dialkyl aryle, les sulfures d'alkyle et d'aryle, les sulfures d'aryle et d'alkyl aryle, les sulfures d'aryle et d'alkylsilane, les dérivés carbonyles, les S-arylthioalkylates, les bis-arylthioalkyles, les dérivés de thiourée, les dérivés d'uréthane, les dérivés de diuréthane et leurs mélanges.

**8.** Matériau selon la revendication 7, **caractérisé en ce que** les sulfures répondent à la formule :

$R^1$-S-$R^2$

où $R^1$ et $R^2$, identiques ou différents, représentant indépendamment l'un de l'autre, un radical alkyle, de préférence un radical alkyle en $C_1$-$C_{12}$, mieux en $C_4$-$C_{10}$ et notamment un radical octyle ; un radical cycle alkyle, de préférence à 6 chaînons, tel que le radical cyclohexyle ; un radical aryle tel que le radical phényle ; un radical arylalkyle tel que le radical benzyle ; un radical

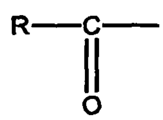

où R est un radical alkyle, de préférence en $C_1$-$C_6$, tel que méthyle, éthyle, propyle ; un radical trialkylsilane, en particulier triméthylsilane.

**9.** Matériau selon la revendication 7, **caractérisé en ce que** les dérivés carbonyles répondent à la formule :

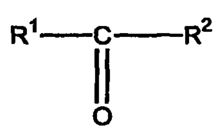

où $R^1$ et $R^2$ sont tels que définis à la revendication 7.

**10.** Matériau selon la revendication 7, **caractérisé en ce que** les dérivés de thiourée répondent à la formule :

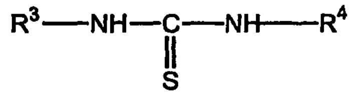

où $R^3$ et $R^4$, identiques ou différents, représentent indépendamment l'un de l'autre, un radical alkyle, de préférence en $C_1$-$C_{12}$, mieux en $C_4$-$C_{10}$, un radical cycloalkyle, de préférence à 6 chaînons tel que le radical cyclohexyle ; un radical alkyle porteur d'un hétérocycle azoté et/ou oxygéné tel qu'un radical 4-morpholinoalkyle, en particulier un radical 4-morpholinoéthyle.

**11.** Matériau selon la revendication 7, **caractérisé en ce que** les dérivés d'uréthane répondent à la formule :

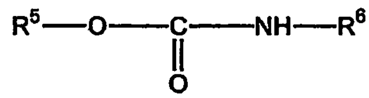

où $R^5$ et $R^6$, identiques ou différents, représentent indépendamment l'un de l'autre, un groupe cycloalkyle, de préférence à 6 chaînons, tel que le radical cyclohexyl ; un groupe cycloalkylalkyle tel qu'un groupe cyclohexylalkyle, notamment un groupe cyclohexylpropyl ; un groupe aryle tel que le groupe phényle ; un groupe arylalkyle notamment le groupe phénylpropyle.

**12.** Matériau selon la revendication 7, **caractérisé en ce que** les dérivés de thiouréthane répondent à la formule :

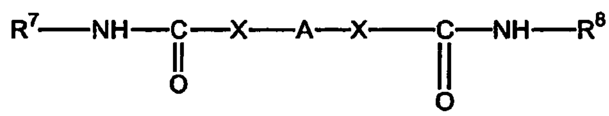

dans laquelle A représente un groupe alkylène en $C_1$-$C_{12}$, de préférence en $C_6$-$C_{10}$, notamment un groupe octylène, un groupe :

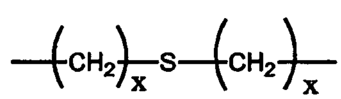

où:

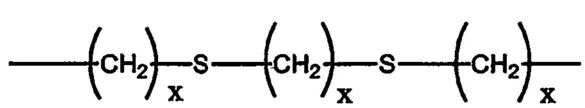

où x est un entier de 1 à 6, de préférence égal à 2 ; X représente-O- ou -S- ; et $R^7$ et $R^8$ représentent, indépendamment l'un de l'autre, un groupe cycloalkyle, de préférence à 6 chaînons, notamment un groupe cyclohexyle, ou un groupe aryle, de préférence à 6 chaînons, notamment un groupe phényle.

**13.** Matériau selon la revendication 7, **caractérisé en ce que** les dérivés de diuréthane répondent à la formule :

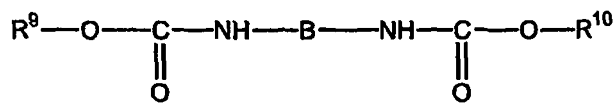

dans laquelle B représente un radical de formule :

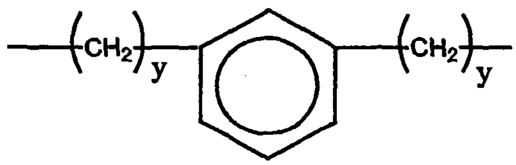

ou

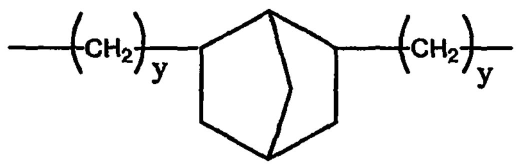

où y est un entier de 1 à 4, de préférence égal à 1, et $R^9$ et $R^{10}$ représentent, indépendamment l'un de l'autre, un radical cycloalkyl- alkyle, notamment un radical cyclohexyl($C_1$-$C_6$)alkyle tel qu'un radical cyclohexyléthyle ou cyclohexylpropyle ; un radical aryl($C_1$-$C_6$)alkyle, notamment un radical phénylpropyle ; un radical cycloalkyl (ponté) ($C_1$-$C_6$)alkyle tel que le radical norbornylméthyle ; les radicaux éther-oxydes de formule :

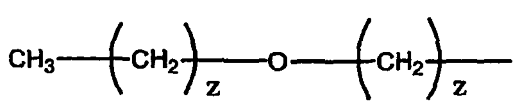

où z est un entier de 1 à 4, de préférence égal à 2.

**14.** Matériau selon la revendication 7, **caractérisé en ce que** les additifs antiplastifiants sont choisis parmi le sulfure de dioctyle, le sulfure de benzyle et phényle, le sulfure de dibenzyle, la 4-(p-tolylthio)benzophénone, le bis(phénylthio) méthane, le S-phénylthiopropionate, le phénylthiométhyltriméthylsilane, la 1-cyclohexyl-3-(2-morpholinoéthyl)-2-thiourée, le cyclohexylpropylcyclohexyl-uréthane, le phénylpropylcyclohexyl-(octane diuréthan), le cyclohexylpropylcyclohexylpropylxylylène diuréthane, le cyclohexyléthylcyclohexyléthylxylylène diuréthane, le phénylpropyl-phénylméthane, le propoxyéthyl-propoxyéthylxylylène diuréthane, le norbornaneméthyl-norbornaneméthylxylylène diuréthane, le phénylpropylphénylpropylxylylène diuréthane, le cyclohexyl-cyclohexyl (thiodiéthane di-S-thiouréthane), le phényl-phényl (thiodiéthane di-S-thiouréthane), le cyclohexyl-cyclohexyl (dithiaoctane diuréthane), le cyclohexylpropyl-cyclohexylpropyl dimethyl norbornane diuréthane, le cyclohexyléthyl-cyclohexyléthyldiméthylnorbornane diuréthane, le propoxyéthyl-propoxyéthyldiméthylnorbornane diuréthane, le norbornaneméthyl-norbornaneméthyldiméthyl norbornane diuréthane, le phénylpropyl-phénylpropyl-diméthylnorbornane diuréthane, le cyclohexyl-cyclohexyl (thiodiéthane diuréthane), le phényl-phényl (thiodiéthane diuréthane).

**15.** Matériau selon la revendication 7, **caractérisé en ce que** les additifs antiplastifiants sont choisis parmi les composés de formules suivantes :

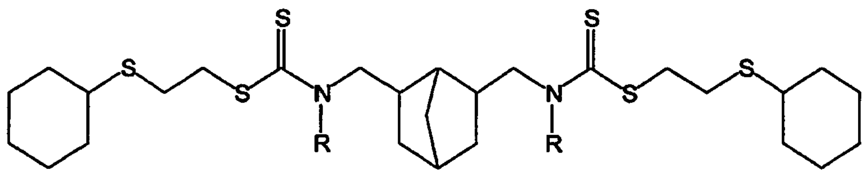

;

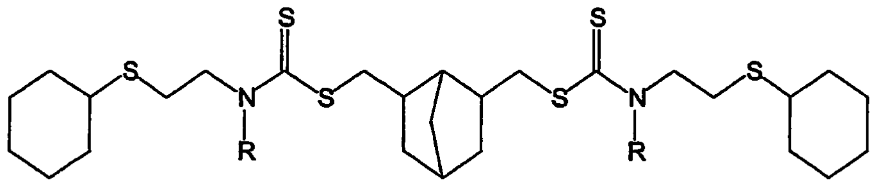

;

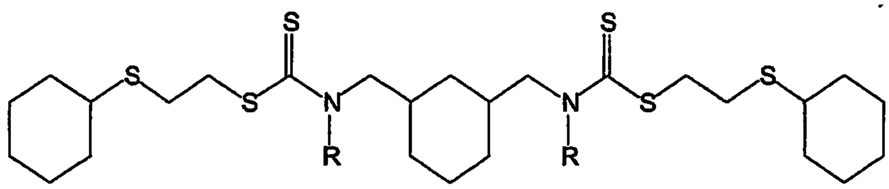

ou

où R représente H, un groupe alkyle, en particulier, un groupe méthyle, éthyle, n-propyle ou n-butyle, ou un groupe aryle, en particulier un groupe phényle.

**16.** Matériau selon l'une quelconque des revendications précédentes, **caractérisé en ce que** l'additif antiplastifiant est présent à raison de 5 à 25%, de préférence 5 à 15%, en masse par rapport à la massa totale de la matrice polythiouréthane.

**17.** Matériau selon l'une quelconque des revendications précédentes, **caractérisé en ce que** la matrice polythiouréthane est obtenue par polyaddition d'au moins un polyisocyanate, de préférence un diisocyanate, et au moins un polythiol, de préférence un tri ou tétrathiol.

**18.** Matériau selon la revendication 17, **caractérisé en ce que** le polyisocyanate est choisi parmi les polyisocyanates aromatiques, les polyisocyanates aliphatiques, les polyisocyanates cycloaliphatiques et leurs mélanges.

**19.** Matériau selon la revendication 18, **caractérisé en ce que** le polyisocyanate est choisi parmi le phénylène diisocyanate, l'éthylphénylène diisocyanate, l'isopropylphénylène diisocyanate, le diméthylphénylène diisocyanate, le diéthylphénylène diisocyanate, le diisopropylphénylène diisocyanate, le triméthylbenzyl triisocyanate, le xylylène diisocyanate, (XDI), le benzyl triisocyanate, le 4,4'-diphénylméthanediisocyanate et l'isophorone diisocyanate, l'hexaméthylène diisocyanate, le bis(isocyanate)méthyle cyclohexane, le dicyclohexyle méthane diisocyanate, le diméthyl norbornyle diisocyanate (NDI) et le norbornyle méthyle diisocyanate, et leurs mélanges.

**20.** Matériau selon la revendication 19, **caractérisé en ce que** le polyisocyanate est choisi parmi : le xylylènediisocyanate, le diméthyl norbornyl diisocyanate et leurs mélanges.

**21.** Matériau selon l'une quelconque des revendications précédentes, **caractérisé en ce que** le polythiol répond à la formule :

$$R'(SH)_{n'}$$

où R' est un groupe organique de valence égale à n' ; et n' est un entier de 2 à 6, de préférence de 3 à 4.

**22.** Matériau selon la revendication 21, **caractérisé en ce que** le polythiol répond à la formule :

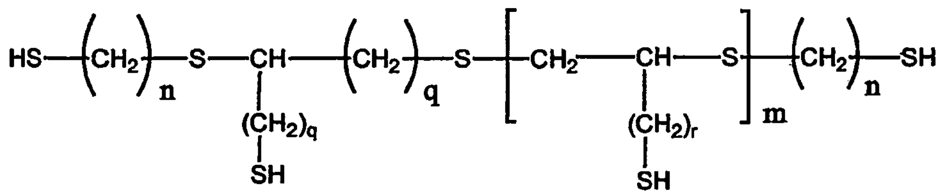

où n est un entier de 1 à 4, de préférence égal à 2, p, q et r sont des entiers de 1 à 4, de préférence égaux à 1, et m est un entier égal à 1 ou 2.

**23.** Matériau selon la revendication 22, **caractérisé en ce que** le polythiol est choisi parmi le penthaérythritol tétrakis mercaptopropionate, le 1-(1'-mercaptoéthylthio)-2,3-dimercaptopropane, le 1-(2'mercaptopropylthio)-2,3-dimercaptopropane, le 1-(3'-mercaptopropylthio)-2,3-dimercaptopropane, le 1-(4'-mercaptobutylethio)-2,3-dimercaptopropane, le 1-(5'-mercaptopenthylthio)-2,3-dimercaptopropane, le 1-(6'-mercpatohexylthio)-2,3-dimercaptopropane, le 1,2-bis(4'-mercaptobutylthio)-3,mercaptopropane, le 1,2-bis(6'-mercaptohexyl)-3-mercaptopropane, le 1,2,3-tris(mercaptométhylthio)propane, le 1,2,3-tris(3'-mercaptopropylthio)propane, le 1,2,3-tris(2'-mercaptoéthylthio) propane, le 1,2,3-tris-(4'-mercaptobutylthio)propane, le 1,2,3-tris(6'-mercaptohexylthio)propane, le 1,6-hexanethiol-1,2,3-propanetritiol et le 1,2-bis(2'-mercaptoéthylthio)-3-mercaptopropane.

**24.** Matériau selon la revendication 23, **caractérisé en ce que** le polythiol répond à la formule :

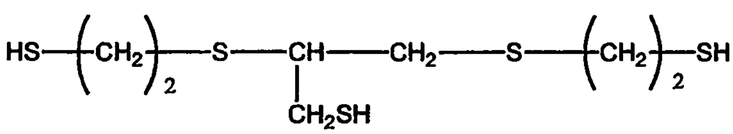 (3SH)

ou

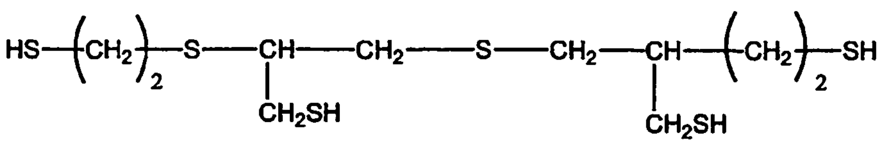 (4SH)

**25.** Matériau selon l'une quelconque des revendications 2 à 17, **caractérisé en ce que** la matrice de polythiouréthane est obtenue par réaction de polyaddition d'un prépolymère polythiouréthane à groupes terminaux NCO et d'un prépolymère polythiouréthane à groupes terminaux SH.

**26.** Matériau selon la revendication 22, **caractérisé en ce que** le prépolymère polythiouréthane à groupes terminaux NCO a une masse molaire moyenne en nombre de 1000 à 2000, de préférence de 1300 à 1700.

**27.** Matériau selon la revendication 25 ou 26, **caractérisé en ce que** le prépolymère polythiouréthane à groupes terminaux NCO à un rapport NCO/SH de 4 :1 à 30 :1, de préférence de 6 :1 ou plus, et mieux de l'ordre de 8 :1.

**28.** Matériau selon l'une quelconque des revendications 25 à 27, **caractérisé en ce que** le prépolymère polythiouréthane à groupes terminaux SH a une masse molaire moyenne en nombre de 200 à 300.

**29.** Matériau selon l'une quelconque des revendications 25 à 28, **caractérisé en ce que** le prépolymère polythiouréthane à groupes terminaux SH a un rapport SH/NCO de 4 :1 à 30 :1, de préférence 6 :1 ou plus et mieux de 8 :1.

**30.** Matériau selon l'une quelconque des revendications 25 à 29, **caractérisé en ce que** le prépolymère polythiouréthane à groupes terminaux NCO et/ou le prépolymère polythiouréthane à groupes terminaux SH résulte de la polyaddition de xylène diisocyanate et/ou de diméthyl norbornyle diisocyanate et de polythiol de formule :

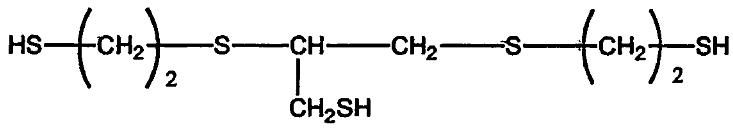

(3SH)

et/ou

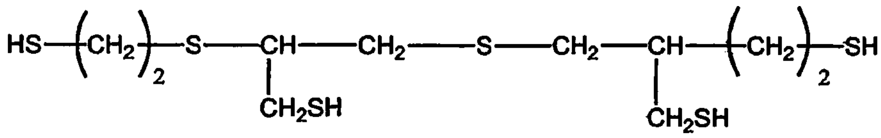

(4SH)

**31.** Matériau thermodur selon l'une quelconque des revendications précédentes, **caractérisé en ce qu'**il présente une séparation de phases, préférentiellement une nanoséparation de phases.

**32.** Matériau thermodur selon l'une quelconque des revendications précédentes, **caractérisé en ce qu'**il présente un taux de restitution d'énergie $G_{IC}$ d'au moins 0,15 $kJ.m^{-2}$, mieux d'au moins 0,20 $kJ.m^{-2}$.

**33.** Lentille ophtalmique comprenant un matériau plastique thermodur, optiquement transparent, comprenant une matrice polymère tridimensionnelle dont le module de perte (E") présente une transition vitreuse secondaire (β), et au moins un additif antiplastifiant.

**34.** Lentille ophtalmique selon la revendication 33, **caractérisée en ce que** le matériau thermodur présente une nanoséparation de phase.

**35.** Lentille ophtalmique selon la revendication 33 ou 34, **caractérisée en ce que** la matrice est choisie parmi une matrice de polyuréthane ou une matrice obtenue par polymérisation d'une composition comprenant au moins un polyépisulfure.

**36.** Lentille ophtalmique selon l'une quelconque des revendications 33 à 35, **caractérisée en ce que** l'additif antiplastifiant a un paramètre de solubilité $\delta_a$ satisfaisant la relation :

$$\delta_{mo} - \delta_a < 5\ MPa^{1/2}$$

où $\delta_{mo}$ est le paramètre de solubilité des monomères polyisocyanates et polythiols utilisés pour former la matrice polythiouréthane.

**37.** Lentille ophtalmique selon la l'une quelconque des revendications 33 à 36, **caractérisée en ce que** le paramètre de solubilité $\delta_a$ de l'additif antiplastifiant satisfait la relation :

$$\delta_{ma} - \delta_a > 4\ MPa^{1/2}$$

où $\delta_{ma}$ est le paramètre de solubilité de la matrice.

**38.** Lentille ophtalmique selon la revendication 33, **caractérisée en ce que** le matériau thermodur est tel que défini à l'une quelconque des revendications 1 à 32.

## Claims

1. A thermoset plastic material, comprising a three-dimensional matrix containing sulphur atoms and at least one antiplasticizing additive that is not capable of reacting with said matrix.

2. A thermoset plastic material according to claim 1, wherein the three-dimensional matrix is a polythiourethane matrix or a polyepisulfide matrix.

3. A material according to claim 1 or 2, wherein antiplasticization occurs in the range of temperatures from 0 to 85°C.

4. A material according to any one of preceding claims, wherein the antiplasticizing additive has a solubility parameter $\delta_a$ satisfying the following relation:

$$\delta_{mo} - \delta_a < 5 \text{ MPa}^{1/2}$$

wherein $\delta_{mo}$ corresponds to the solubility parameter of the polyisocyanate and polythiol monomers used to produce the polythiourethane matrix.

5. A Material according to any one of preceding claims, wherein the solubility parameter $\delta_a$ of the antiplasticizing additive does satisfy the following relation:

$$\delta_{ma} - \delta_a > 4 \text{ MPa}^{1/2}$$

wherein $\delta_{ma}$ corresponds to the solubility parameter of the matrix.

6. A material according to any one of preceding claims, wherein the solubility parameter of the plasticizing additive does satisfy the following relation:

$$19 \le \delta_a \le 23.$$

7. A material according to any one of preceding claims, wherein the antiplasticizing additive is selected from dialkyl sulfides, diaryl sulfides, dialkylaryl sulfides, alkylaryl sulfides, aryl and alkylaryl sulfides, aryl and alkyl silane sulfides, carbonyl derivatives, S-arylthioalkylates, bis-arylthioalkyls, thiourea derivatives, urethane derivatives, diurethane derivatives and mixtures thereof.

8. A material according to claim 7, wherein the sulfides have following formula:

$R^1\text{-S-}R^2$

wherein $R^1$ and $R^2$, being the same or different, represent independently from each other an alkyl radical, preferably a $C_1$-$C_{12}$ alkyl radical, more preferably a $C_4$-$C_{10}$ alkyl radical and in particular an octyl radical; a cycloalkyl radical, preferably a 6-membered radical, such as a cyclohexyl radical; an aryl radical such as a phenyl radical; an arylalkyl radical such as a benzyl radical; a radical

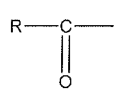

wherein R is an alkyl radical, preferably a $C_1$-$C_6$ alkyl radical, such as a methyl, ethyl, propyl radical; a trialkyl silane radical, especially a trimethyl silane.

**9.** A material according to claim 7, wherein carbonyl derivatives have following formula:

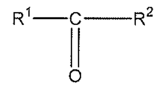

wherein $R^1$ and $R^2$ are such as defined in claim 7.

**10.** A material according to claim 7, wherein thiourea derivatives have following formula:

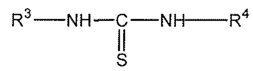

wherein $R^3$ and $R^4$, being the same or different, represent independently from each other an alkyl radical, preferably a $C_1$-$C_{12}$ alkyl radical, more preferably a $C_4$-$C_{10}$ alkyl radical, a cycloalkyl radical, preferably a 6-membered radical such as a cyclohexyl radical; an alkyl radical bearing a nitrogen and/or an oxygen heterocycle such as a 4-morpholinoalkyl radical, especially a 4-morpholinoethyl radical.

**11.** A material according to claim 7, wherein urethane derivatives have following formula:

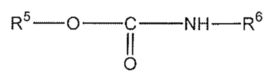

wherein $R^5$ and $R^6$, being the same or different, represent independently from each other a cycloalkyl group, preferably a 6-membered radical, such as a cyclohexyl radical; a cycloalkyl alkyl group such as a cyclohexylalkyl group, in particular a cyclohexylpropyl group; an aryl group such as a phenyl group; an arylalkyl group in particular a phenylpropyl group.

**12.** A material according to claim 7, wherein the thiourethane derivatives have following formula:

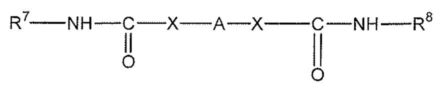

wherein A represents a $C_1$-$C_{12}$ alkylene group, preferably a $C_6$-$C_{10}$ alkylene group, in particular an octylene group, a group:

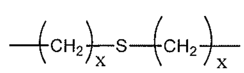

or:

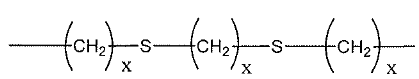

wherein x is an integer ranging from 1 to 6, preferably x is 2; X represents -O- or -S-; and $R^7$ and $R^8$ represent independently from each other, a cycloalkyl group, preferably a 6-membered group, in particular a cyclohexyl group, or an aryl group, preferably a 6-membered group, in particular a phenyl group.

**13.** A material according to claim 7, wherein diurethane derivatives have the following formula:

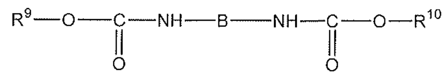

wherein B represents a radical of formula:

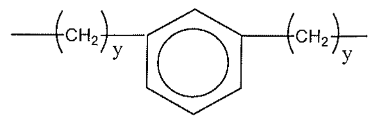

or

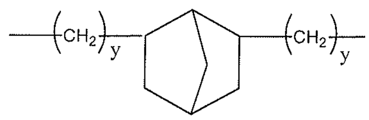

wherein y is an integer ranging from 1 to 4, preferably y is 1, and $R^9$ and $R^{10}$ represent independently from each other, a cycloalkyl alkyl radical, in particular a cyclohexyl ($C_1$-$C_6$)alkyl radical such as a cyclohexylethyl or a cyclohexylpropyl radical; an aryl ($C_1$-$C_6$)alkyl radical, in particular a phenylpropyl radical; a (bridged) cycloalkyl ($C_1$-$C_6$) alkyl radical such as a norbornylmethyl radical; ether-oxide radicals of formula:

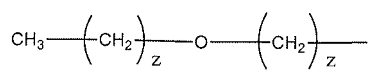

wherein z is an integer ranging from 1 to 4, preferably z is 2.

**14.** A material according to claim 7, wherein the antiplasticizing additives are selected from dioctyl sulfide, benzyl and phenyl sulfide, dibenzyl sulfide, 4-(p-tolylthio)benzophenone, bis(phenylthio)methane, S-phenylthiopropionate, phenylthiomethyltrimethyl silane, 1-cyclohexyl-3-(2-morpholinoethyl)-2-thiourea, cyclohexylpropylcyclohexyl urethane, phenylpropylcyclohexyl-(octane diurethane), cyclohexylpropyl-cyclohexylpropylxylylene diurethane, cyclohexylethyl-cyclohexylethylxylylene diurethane, phenylpropyl-phenylmethane, propoxyethyl-propoxyethylxylylene diurethane, norbornanemethyl-norbornanemethylxylylene diurethane, phenylpropyl-phenylpropylxylylene diurethane, cyclohexyl-cyclohexyl (thiodiethane di-S-thiourethane), phenyl-phenyl (thiodiethane di-S-thiourethane), cyclohexyl-cyclohexyl (dithiaoctane diurethane), cyclohexylpropyl-cyclohexylpropyl dimethyl norbornane diurethane, cyclohexylethyl-cyclohexylethyldimethyl norbornane diurethane, propoxyethyl-propoxyethyldimethyl norbornane diurethane, norbornanemethyl-norbornanemethyldimethyl norbornane diurethane, phenylpropyl-phenylpropyl-dimethyl norbornane diurethane, cyclohexyl-cyclohexyl (thiodiethane diurethane), phenyl-phenyl (thiodiethane diurethane).

**15.** A material according to claim 7, wherein the antiplasticizing additives are selected from compounds having following formulae:

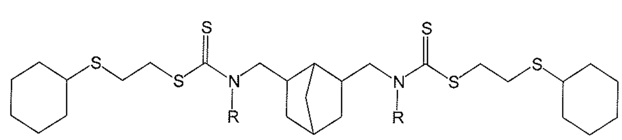
;

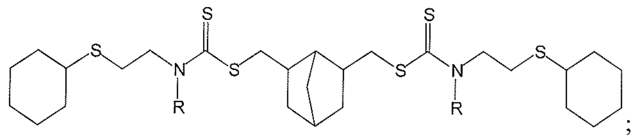

;

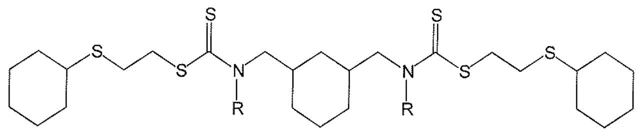

or

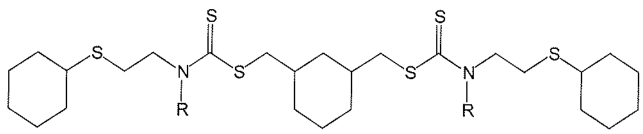

wherein R represents H, an alkyl group, especially, a methyl, ethyl, n-propyl or n-butyl group, or an aryl group, especially a phenyl group.

**16.** A material according to any one of preceding claims, wherein the antiplasticizing additive is present in amount ranging from 5 to 25%, preferably from 5 to 15%, by weight as compared to the total weight of the polythiourethane matrix.

**17.** A material according to any one of preceding claims, wherein the polythiourethane matrix is produced by polyaddition of at least one polyisocyanate, preferably a diisocyanate and at least one polythiol, preferably a tri- or tetrathiol.

**18.** A material according to claim 17, wherein the polyisocyanate is selected from aromatic polyisocyanates, aliphatic polyisocyanates, cycloaliphatic polyisocyanates and mixtures thereof.

**19.** A material according to claim 18, wherein the polyisocyanate is selected from phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzyl triisocyanate, xylylene diisocyanate (XDI), benzyl triisocyanate, 4,4'-diphenylmethanediisocyanate and isophorone diisocyanate, hexamethylene diisocyanate, bis(isocyanate)methyl cyclohexane, dicyclohexyl methane diisocyanate, dimethyl norbornyl diisocyanate (NDI) and norbornyl methyl diisocyanate, and mixtures thereof.

**20.** A material according to claim 19, wherein the polyisocyanate is selected from xylylene diisocyanate, dimethyl norbornyl diisocyanate and mixtures thereof.

**21.** A material according to any one of preceding claims, wherein the polythiol has following formula:

$$R'(SH)_{n'}$$

wherein R' represents an organic group the valence of which corresponds to n'; where n' is an integer ranging from 2 to 6, preferably n is 3 or 4.

**22.** A material according to claim 21, wherein the polythiol has following formula:

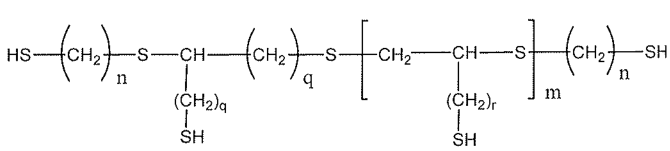

wherein n is an integer ranging from 1 to 4, preferably n is 2, p, q and r are integers ranging from 1 to 4, preferably p, q and r are 1, and m is the integer 1 or 2.

**23.** A material according to claim 22, wherein the polythiol is selected from penthaerythritol tetrakis mercaptopropionate, 1-(1'-mercaptoethylthio)-2,3-dimercapto propane, 1-(2'mercaptopropylthio)-2,3-dimercapto propane, 1-(3'-mercaptopropylthio)-2,3-dimercapto propane, 1-(4'-mercaptobutylthio)-2,3-dimercapto propane, 1-(5'-mercaptopenthylthio)-2,3-dimercapto propane, 1-(6'-mercpatohexylthio)-2,3-dimercapto propane, 1,2-bis(4'-mercaptobutylthio)-3,mercapto propane, 1,2-bis(6'-mercaptohexyl)-3-mercapto propane, 1,2,3-tris(mercaptomethylthio)propane, 1,2,3-tris(3'-mercaptopropylthio) propane, 1,2,3-tris(2'-mercaptoethylthio)propane, 1,2,3-tris-(4'-mercaptobutylthio)propane, 1,2,3-tris(6'-mercaptohexylthio)propane, 1,6-hexanethiol-1,2,3-propanetritiol and 1,2-bis(2'-mercaptoethylthio)-3-mercapto propane.

**24.** A material according to claim 23, wherein the polythiol has following formula:

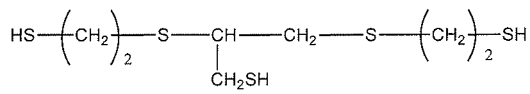 (3SH)

or

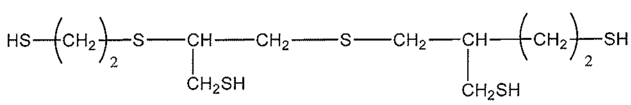 (4SH)

**25.** A material according to any one of claims 2 to 17, wherein the polythiourethane matrix is produced by means of a polyaddition reaction of a NCO end group-containing polythiourethane prepolymer with a SH end group-containing polythiourethane prepolymer.

**26.** A material according to claim 22, wherein the NCO end group-containing polythiourethane prepolymer has a number average molecular weight ranging from 1000 to 2000, preferably ranging from 1300 to 1700.

**27.** A material according to claim 25 or 26, wherein the NCO end group-containing polythiourethane prepolymer has a NCO/SH ratio from 4:1 to 30:1, preferably of 6:1 or more, and more preferably of about 8:1.

**28.** A material according to any one of claims 25 to 27, wherein the SH end group-containing polythiourethane prepolymer has a number average molecular weight ranging from 200 to 300.

**29.** A material according to any one of claims 25 to 28, wherein the SH end group-containing polythiourethane prepolymer has a SH/NCO ratio ranging from 4:1 to 30:1, preferably of 6:1 or more, and more preferably of 8:1.

**30.** A material according to any one of claims 25 to 29, wherein the NCO end group-containing polythiourethane prepolymer and/or the SH end group-containing polythiourethane prepolymer results from the polyaddition of xylene diisocyanate and/or dimethyl norbornyl diisocyanate with polythiol of formula:

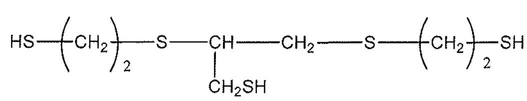 (3SH)

and/or

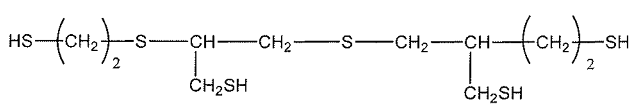 (4SH)

**31.** A thermoset material according to any one of preceding claims having a phase separation, preferably a nanophase separation.

**32.** A thermoset material according to any one of preceding claims having an energy release ratio $G_{IC}$ of at least 0.15 $kJ.m^{-2}$, more preferably of at least 0.20 $kJ.m^{-2}$.

**33.** An ophthalmic lens comprising an optically transparent, thermoset plastic material, comprising a three-dimensional polymer matrix, the loss modulus (E") of which presenting a secondary glass transition (β), and at least one antiplasticizing additive.

**34.** An ophthalmic lens according to claim 33, wherein the thermoset material presents a nanophase separation.

**35.** An ophthalmic lens according to claim 33 or 34, wherein the matrix is selected from a polyurethane matrix or a matrix produced by polymerizing a composition comprising at least one polyepisulfide.

**36.** An ophthalmic lens according to any one of claims 33 to 35, wherein the antiplasticizing additive has a solubility parameter $\delta_a$ that does satisfy following relation:

$$\delta_{mo} - \delta_a < 5\ MPa^{1/2}$$

wherein $\delta_{mo}$ corresponds to the solubility parameter of the polyisocyanate and polythiol monomers used to produce the polythiourethane matrix.

**37.** An ophthalmic lens according to any one of claims 33 to 36, wherein the solubility parameter $\delta_a$ of the antiplasticizing additive does satisfy the following relation:

$$\delta_{ma} - \delta_a > 4\ MPa^{1/2}$$

wherein $\delta_{ma}$ corresponds to the solubility parameter of the matrix.

**38.** An ophthalmic lens according to claim 33, wherein the thermoset material is such as defined in any one of claims 1 to 32.

**Patentansprüche**

**1.** Duroplastisches Kunststoffmaterial, **dadurch gekennzeichnet, dass** es eine dreidimensionale Matrix umfasst, die S-Atome und mindestens einen härtenden Zusatzstoff umfasst, der nicht mit dieser Matrix reagieren kann.

**2.** Duroplastisches Kunststoffinaterial nach Anspruch 1, **dadurch gekennzeichnet, dass** die dreidimensionale Matrix eine Matrix aus Polythiourethan oder Polyepisulfid ist.

**3.** Material nach Anspruch 1 oder 2, **dadurch gekennzeichnet, dass** die Härtung in einem Temperaturbereich von 0 bis 85 ˚C stattfindet.

**4.** Material nach einem der vorhergehenden Ansprüche, **dadurch gekennzeichnet, dass** der härtende Zusatzstoff einen Löslichkeitsparameter $\delta_a$ aufweist, der die folgende Gleichung erfüllt:

$$\delta_{mo} - \delta_a < 5\ MPa^{1/2}$$

wobei $\delta_{mo}$ der Löslichkeitsparameter der für die Bildung der Polythiourethanmatrix verwendeten Polyisocyanat- und Polythiolmonomere ist.

**5.** Material nach einem der vorhergehenden Ansprüche, **dadurch gekennzeichnet, dass** der Löslichkeitsparameter $\delta_a$ des härtenden Zusatzstoffes die folgende Beziehung erfüllt:

$$\delta_{ma} - \delta_a > 4 \ MPa^{1/2}$$

wobei $\delta_{ma}$ der Löslichkeitsparameter der Matrix ist.

**6.** Material nach einem der vorhergehenden Ansprüche, **dadurch gekennzeichnet, dass** der Löslichkeitsparameter des härtenden Zusatzstoffes die folgende Beziehung erfüllt:

$$19 \leq \delta_a \leq 23.$$

**7.** Material nach einem der vorhergehenden Ansprüche, **dadurch gekennzeichnet, dass** der härtende Zusatzstoff aus Dialkylsulfiden, Diarylsulfiden, Dialkylarylsulfiden, Alkyl- und Arylsulfiden, Aryl- und Alkylarylsulfiden, Aryl- und Alkylsilansulfiden, Carbonylderivaten, S-Arylthioalkylaten, Bisarylthioalkylen, Thioharnstoffderivaten, Urethanderivaten, Diurethanderivaten und ihren Mischungen ausgewählt werden.

**8.** Material nach Anspruch 7, **dadurch gekennzeichnet, dass** die Sulfide der folgenden Formel entsprechen:

$$R^1\text{-}S\text{-}R^2$$

wobei $R^1$ und $R^2$, identisch oder verschieden, unabhängig voneinander einen Alkylrest, vorzugsweise einen $C_1$-$C_{12}$-Alkylrest, insbesondere bevorzugt einen $C_4$-$C_{10}$-Rest und am meisten bevorzugt einen Octylrest, einen Cycloalkylrest, vorzugsweise mit 6 Kettengliedern wie z. B. den Cyclohexylrest, einen Arylrest wie z. B. den Phenylrest, einen Arylalkylrest wie z. B. den Benzylrest; einen Rest

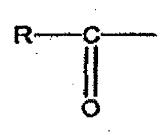

wobei R ein Alkylrest, vorzugsweise ein $C_1$-$C_6$-Alkylrest wie z. B. Methyl, Ethyl, Propyl ist, oder einen Trialkylsilanrest, insbesondere Trimethylsilan darstellen.

**9.** Material nach Anspruch 7, **dadurch gekennzeichnet, dass** die Carbonylderivate der folgenden Formel entsprechen:

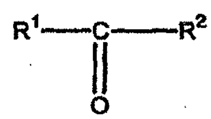

wobei $R^1$ und $R^2$ so wie in Anspruch 7 definiert sind.

**10.** Material nach Anspruch 7, **dadurch gekennzeichnet, dass** die Thioharnstoffderivate der folgenden Formel entsprechen:

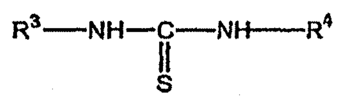

wobei $R^3$ und $R^4$, identisch oder verschieden, unabhängig voneinander einen Alkylrest, vorzugsweise einen $C_1$-$C_{12}$-Alkylrest, insbesondere bevorzugt einen $C_4$-$C_{10}$-Rest, einen Cycloalkylrest, vorzugsweise mit 6 Kettengliedern, wie z. B. den Cyclohexylrest, einen Alkylrest, der einen stickstoffhaltigen und/oder sauerstoffhaltigen Heterocyclus trägt, wie z. B. einen 4-Morpholinoalkylrest, insbesondere einen 4-Morpholinoethylrest darstellen.

**11.** Material nach Anspruch 7, **dadurch gekennzeichnet, dass** die Urethanderivate der folgenden Formel entsprechen:

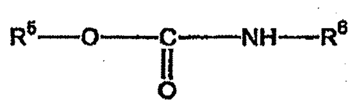

wobei $R^5$ und $R^6$, identisch oder verschieden, unabhängig voneinander eine Cycloalkylgruppe, vorzugsweise mit 6 Kettengliedern, wie z. B. einen Cyclohexylrest, eine Cycloalkylalkylgruppe wie z. B. eine Cyclohexylalkylgruppe, insbesondere eine Cyclohexylpropylgruppe; eine Arylgruppe wie z. B. die Phenylgruppe, eine Arylalkylgruppe, insbesondere die Phenylpropylgruppe darstellen.

**12.** Material nach Anspruch 7, **dadurch gekennzeichnet, dass** die Thiourethanderivate der folgenden Formel entsprechen:

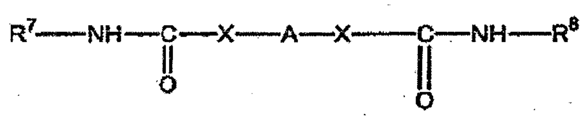

in der A eine $C_1$-$C_{12}$-Alkylengruppe, vorzugsweise eine $C_6$-$C_{10}$-Alkylengruppe, insbesondere eine Octylengruppe, eine Gruppe:

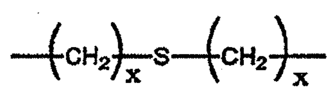

oder

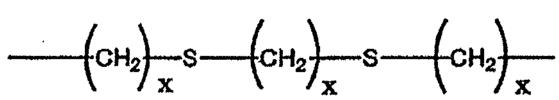

in der x eine ganze Zahl von 1 bis 6, vorzugsweise gleich 2 ist, X -O- oder -S- darstellt; und $R^7$ und $R^8$, unabhängig voneinander, eine Cycloalkylgruppe, vorzugsweise mit 6 Kettengliedern, insbesondere eine Cyclohexylgruppe, oder eine Arylgruppe, vorzugsweise mit 6 Kettengliedern, insbesondere eine Phenylgruppe darstellen.

**13.** Material nach Anspruch 7, **dadurch gekennzeichnet, dass** die Diurethanderivate der folgenden Formel entsprechen:

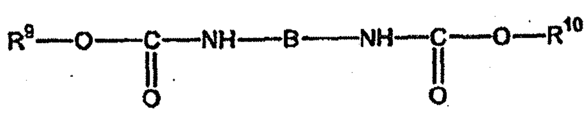

in welcher B einen Rest der folgenden Formel darstellt:

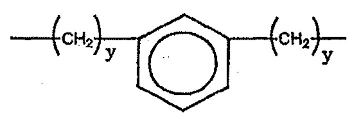

oder

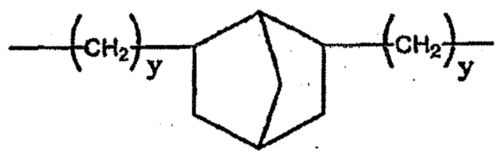

wobei y eine ganze Zahl von 1 bis 4, vorzugsweise gleich 1 ist, und $R^9$ und $R^{10}$, unabhängig voneinander, einen Cycloalkylalkylrest, insbesondere einen Cyclohexyl($C_1$-$C_6$)alkylrest wie z. B. einen Cyclohexylethyl- oder Cyclohexylpropylrest, einen Aryl($C_1$-$C_6$)alkylrest, insbesondere einen Phenylpropylrest, einen (verbrückten) Cycloalkyl ($C_1$-$C_6$)alkylrest wie z. B. den Norbornylmethylrest oder die Etheroxidreste der folgenden Formel darstellen:

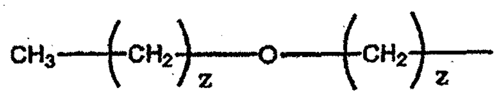

wobei z eine ganze Zahl von 1 bis 4, vorzugsweise gleich 2 ist.

**14.** Material nach Anspruch 7, **dadurch gekennzeichnet, dass** die härtenden Zusatzstoffe aus Dioctylsulfid, Benzyl- und Phenylsulfid, Dibenzylsulfid, 4-(p-Tolylthio)benzophenon, Bis(phenylthio)methan, S-Phenylthiopropionat, Phenylthiomethyltrimethylsilan, 1-Cyclohexyl-3-(2-morpholinoethyl)-2-thioharnstoff, Cyclohexylpropylcyclohexylurethan, Phenylpropylcyclohexyl(octandiurethan), Cyclohexylpropyl-cyclohexylpropylxylylendiurethan, Cyclohexylethyl-cyclohexylethylxylylendiurethan, Phenylpropyl-phenylmethan, Propoxyethyl-propoxyethylxylylendiurethan, Norbornanmethyl-norbornanmethylxylylendiurethan, Phenylpropyl-phenylpropylxylylendiurethan, Cyclohexyl-cyclohexyl(thiodiethan-di-S-thiourethan), Phenyl-phenyl(thiodiethan-di-S-thiourethan), Cyclohexyl-cyclohexyl(dithiaoctandiurethan), Cyclohexylpropyl-cyclohexylpropyldimethylnorbornandiurethan, Cyclohexylethylcyclohexylethyldimethylnorbornandiurethan, Propoxyethylpropoxyethyldimethylnorbornandiurethan, Norbornanmethylnorbornanmethyldimethylnorbornandiurethan, Phenylpropyl-phenylpropyldimethylnorbornandiurethan, Cyclohexylcyclohexyl(thiodiethandiurethan), Phenyl-phenyl(thiodiethandiurethan).

**15.** Material nach Anspruch 7, **dadurch gekennzeichnet, dass** die härtenden Zusatzstoffe aus den folgenden Verbindungen mit den folgenden Formeln ausgewählt werden:

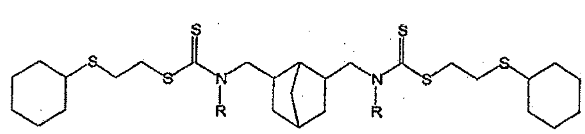

:

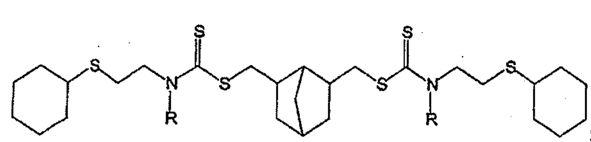

;

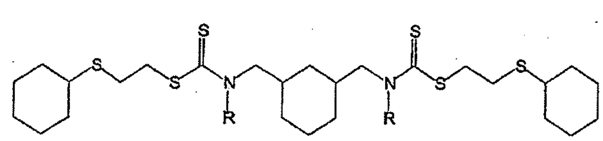

oder

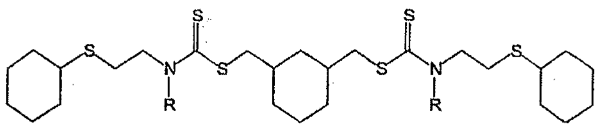

wobei R H, eine Alkylgruppe, insbesondere eine Methyl-, Ethyl-, n-Propyl- oder n-Butylgruppe, eine Arylgruppe, insbesondere eine Phenylgruppe darstellt.

**16.** Material nach einem der vorhergehenden Ansprüche, **dadurch gekennzeichnet, dass** der härtende Zusatzstoff mit 5 bis 25 Massen-%, vorzugsweise mit 5 bis 15 Massen-% bezogen auf die Gesamtmasse der Polythiourethanmatrix vorhanden ist.

**17.** Material nach einem der vorhergehenden Ansprüche, **dadurch gekennzeichnet, dass** die Polythiourethanmatrix durch Polyaddition mindestens eines Polyisocyanats, vorzugsweise eines Diisocyanats, und mindestens eines Polythiols, vorzugsweise eines Tri- oder Tetrathiols, erhalten wird.

**18.** Material nach Anspruch 17, **dadurch gekennzeichnet, dass** das Polyisocyanat aus den aromatischen Polyisocyanaten, den aliphatischen Polyisocyanaten, den cycloaliphatischen Polyisocyanaten und ihren Mischungen ausgewählt wird.

**19.** Material nach Anspruch 18, **dadurch gekennzeichnet, dass** das Polyisocyanat aus Phenylendiisocyanat, Ethylphenylendiisocyanat, Isopropylphenylendiisocyanat, Dimethylphenylendiisocyanat, Diethylphenylendiisocyanat, Diisopropylphenylendiisocyanat, Trimethylbenzyltriisocyanat, Xylylendiisocyanat (XDI), Benzyltriisocyanat, 4,4'-Diphenylmethandiisocyanat und Isophorondiisocyanat, Hexamethylendiisocyanat, Bis(isocyanat)methylcyclohexan, Dicyclohexylmethandiisocyanat, Dimethylnorbomyldiisocyanat (NDI) und Norbornylmethyldiisocyanat und ihren Mischungen ausgewählt wird.

**20.** Material nach Anspruch 19, **dadurch gekennzeichnet, dass** das Polyisocyanat aus Xylylendiisocyanat, Dimethylnorbornyldiisocyanat und ihren Mischungen ausgewählt wird.

**21.** Material nach einem der vorhergehenden Ansprüche, **dadurch gekennzeichnet, dass** das Polythiol der folgenden Formel entspricht:

$$R'(SH)_{n'},$$

wobei R' eine organische Gruppe mit einer Valenz gleich n' ist und n' eine ganze Zahl von 2 bis 6, vorzugsweise von 3 bis 4 ist.

**22.** Material nach Anspruch 21, **dadurch gekennzeichnet, dass** das Polythiol der folgenden Formel entspricht:

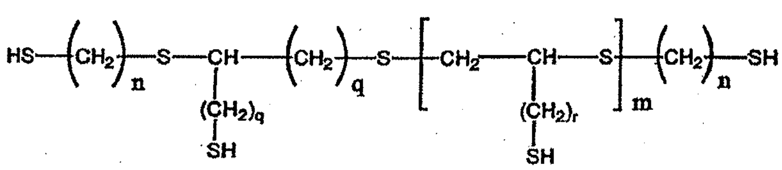

wobei n eine ganze Zahl von 1 bis 4, vorzugsweise gleich 2 ist, p, q und r ganze Zahlen von 1 bis 4, vorzugsweise gleich 1 sind und m eine ganze Zahl gleich 1 oder 2 ist.

**23.** Material nach Anspruch 22, **dadurch gekennzeichnet, dass** das Polythiol aus Penthaerythrit-tetrakismercaptopropionat, 1-(1'-Mercaptoethylthio)-2,3-dimercaptopropan, 1-(2'-Mercaptopropylthio)-2,3-dimercaptopropan, 1-(3'-Mercaptopropylthio)-2,3-dimercaptopropan, 1-(4'-Mercaptobutylthio)-2,3-dimercaptopropan, 1-(5'-Mercaptopentylthio)-2,3-dimercaptopropan, 1-(6'-Mercaptohexylthio)-2,3-dimercaptopropan, 1,2-Bis-(4'-mercaptobutylthio)-3-mercaptopropan, 1,2-Bis-(6'-mercaptohexyl)-3-mercaptopropan, 1,2,3-Tris(mercaptomethylthio)propan, 1,2,3-Tris-(3'-mercaptopropylthio)propan, 1,2,3-Tris-(2'-mercaptoethylthio)propan, 1,2,3-Tris-(4'-mercaptobutylthio)propan, 1,2,3-Tris-(6'-mercaptohexylthio)propan, 1,6-Hexanthiol-1,2,3-propantritiol und 1,2-Bis-(2'-mercaptoethylthio)-3-mercaptopropan.

24. Material nach Anspruch 23, **dadurch gekennzeichnet, dass** das Polythiol der folgenden Formel entspricht:

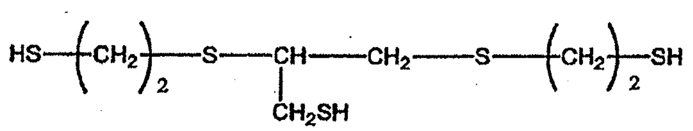

(3SH)

oder

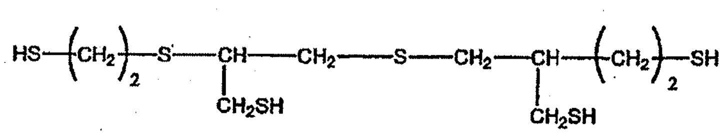

(4SH)

25. Material nach einem der Ansprüche 2 bis 17, **dadurch gekennzeichnet, dass** die Polythiourethanmatrix durch eine Polyadditionsreaktion eines Polythiourethan-Präpolymers mit terminalen NCO-Gruppen und eines Polythiourethan-Präpolymers mit terminalen SH-Gruppen erhalten wird.

26. Material nach Anspruch 22, **dadurch gekennzeichnet, dass** das Polythiourethan-Präpolymer mit terminalen NCO-Gruppen eine mittlere (Zahlenmittel) Molmasse von mindestens 1000 bis 2000, vorzugsweise von 1300 bis 1700 aufweist.

27. Material nach Anspruch 25 oder 26, **dadurch gekennzeichnet, dass** das Polythiourethan-Präpolymer mit terminalen NCO-Gruppen ein NCO/SH-Verhältnis von 4:1 bis 30:1, vorzugsweise von 6:1 oder mehr oder insbesondere bevorzugt von etwa 8:1 aufweist.

28. Material nach einem der Ansprüche 25 bis 27, **dadurch gekennzeichnet, dass** das Polythiourethan-Präpolymer mit terminalen SH-Gruppen eine mittlere (Zahlenmittel) Molmasse von mindestens 200 bis 300 aufweist.

29. Material nach einem der Ansprüche 25 bis 28, **dadurch gekennzeichnet, dass** das Polythiourethan-Präpolymer mit terminalen SH-Gruppen ein SH/NCO-Verhältnis von 4:1 bis 30:1, vorzugsweise von 6:1 oder mehr und insbesondere bevorzugt von 8:1 aufweist.

30. Material nach einem der Ansprüche 25 bis 29, **dadurch gekennzeichnet, dass** das Polythiourethan-Präpolymer mit terminalen NCO-Gruppen und/oder das Polythiourethan-Präpolymer mit terminalen SH-Gruppen aus der Polyaddition von Xyloldiisocyanat und/oder Dimethylnorbornyldiisocyanat und dem Polythiol der folgenden Formeln resultiert:

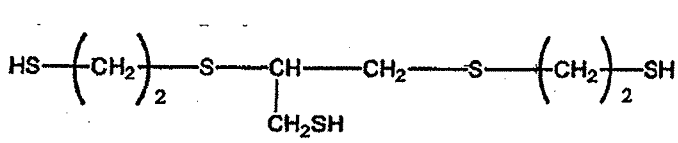

(3SH)

und/oder

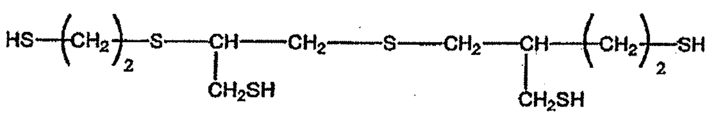

(4SH)

**31.** Duroplastisches Material nach einem der vorhergehenden Ansprüche, **dadurch gekennzeichnet, dass** es eine Phasentrennung, vorzugsweise eine Nanophasentrennung aufweist.

**32.** Duroplastisches Material nach einem der vorhergehenden Ansprüche, **dadurch gekennzeichnet, dass** es eine Energiefreisetzungsrate $G_{IC}$ von mindestens 0,15 $kJ.m^{-2}$, insbesondere bevorzugt von mindestens 0,20 $kJ.m^{-2}$ aufweist.

**33.** Ophthalmische Linse, umfassend ein optisch transparentes, duroplastisches Kunststoffmaterial, umfassend eine dreidimensionale Polymermatrix, deren Verlustmodul (E") einen sekundären Glasübergang (β) zeigt, und mindestens einen härtenden Zusatzstoff.

**34.** Ophthalmische Linse nach Anspruch 33, **dadurch gekennzeichnet, dass** das duroplastische Material eine Nanophasentrennung aufweist.

**35.** Ophthalmische Linse nach Anspruch 33 oder 34, **dadurch gekennzeichnet, dass** die Matrix aus einer Polyurethanmatrix oder einer Matrix ausgewählt wird, die durch Polymerisation einer mindestens ein Polyepisulfid enthaltenden Zusammensetzung erhalten wird.

**36.** Ophthalmische Linse nach einem der Ansprüche 33 bis 35, **dadurch gekennzeichnet, dass** der härtende Zusatzstoff einen Löslichkeitsparameter $\delta_a$ aufweist, der die folgende Gleichung erfüllt:

$$\delta_{mo} - \delta_a < 5 \text{ MPa}^{1/2}$$

wobei $\delta_{mo}$ der Löslichkeitsparameter der für die Bildung der Polythiourethanmatrix verwendeten Polyisocyanat- und Polythiolmonomere ist.

**37.** Ophthalmische Linse nach einem der Ansprüche 33 bis 36, **dadurch gekennzeichnet, dass** der Löslichkeitsparameter $\delta_a$ des härtenden Zusatzstoffes die folgende Gleichung erfüllt:

$$\delta_{ma} - \delta_a > 4 \text{ MPa}^{1/2}$$

wobei $\delta_{ma}$ der Löslichkeitsparameter der Matrix ist.

**38.** Ophthalmische Linse nach Anspruch 33, **dadurch gekennzeichnet, dass** das duroplastische Material so ist wie in einem der Ansprüche 1 bis 32 definiert.

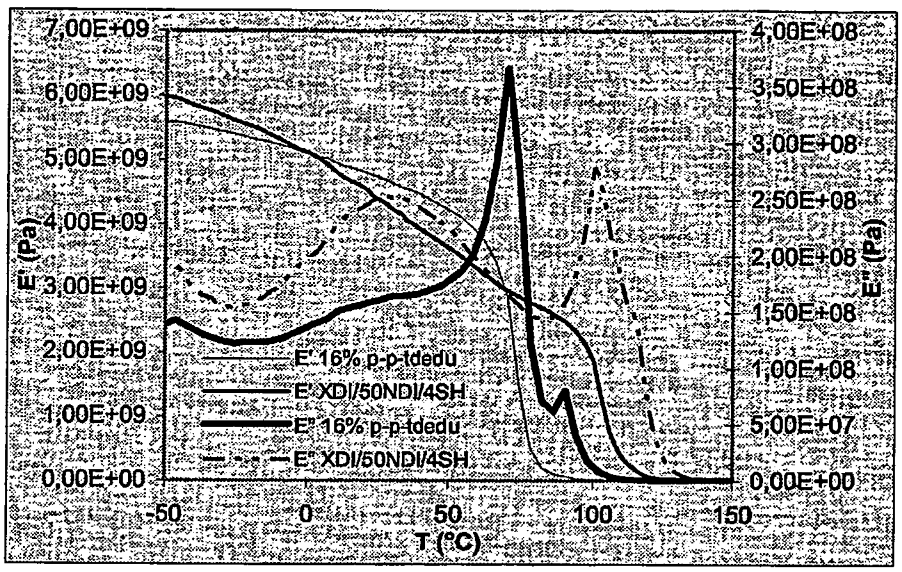


VISUALISATION DE L'ANTIPLASTIFICATION SUR LE SPECTRE DMA

FIGURE 1

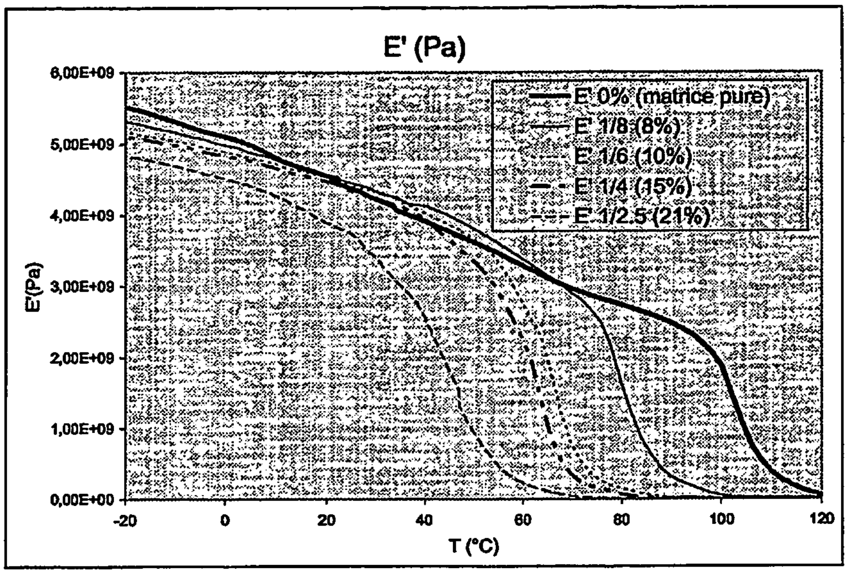


EVOLUTION DE E' EN FONCTION DE LA TEMPERATURE POUR LES SYSTEMES CONTENANT L'ADDITIF pp-ch-u

FIGURE 2

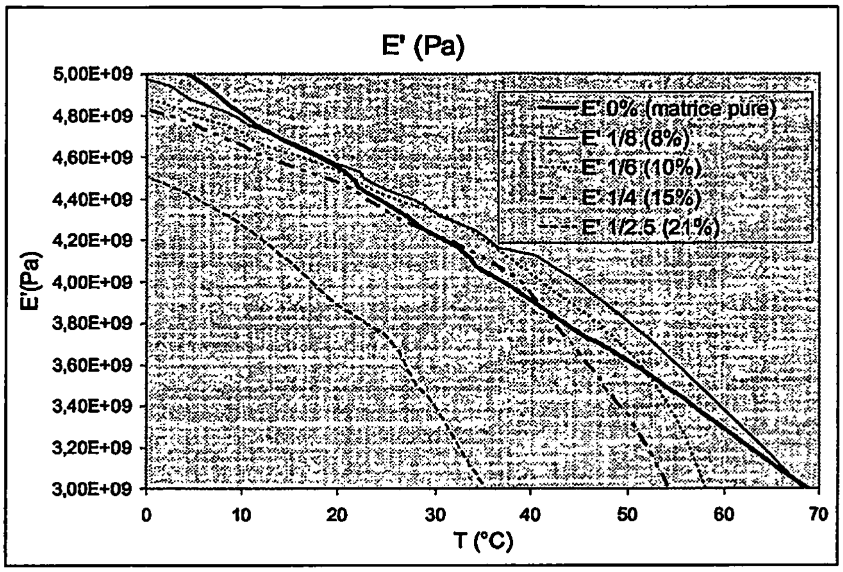


EVOLUTION DE E' EN FONCTION DE LA TEMPERATURE POUR LES SYSTEMES CONTENANT L'ADDITIF pp-ch-u, DETAIL DE LA COURBE

## FIGURE 3

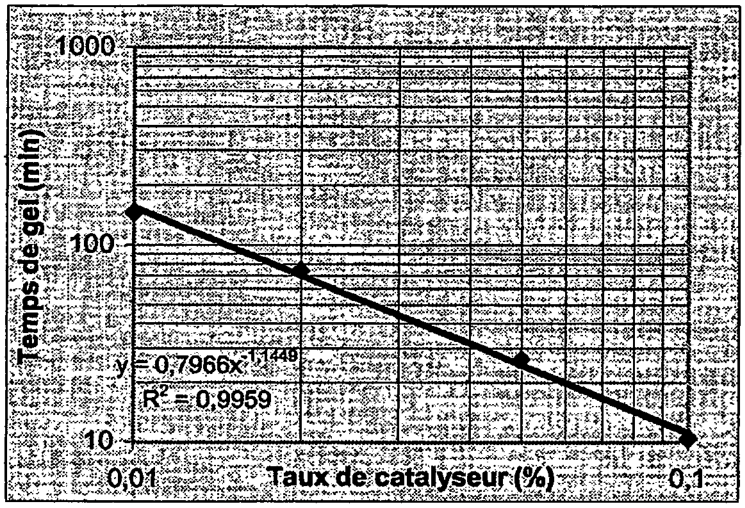


TEMPS DE GEL DU POLYMERE XDI/00NDI/3SH à 60°C, EN FONCTION DU TAUX DE CATALYSEUR

FIGURE 4

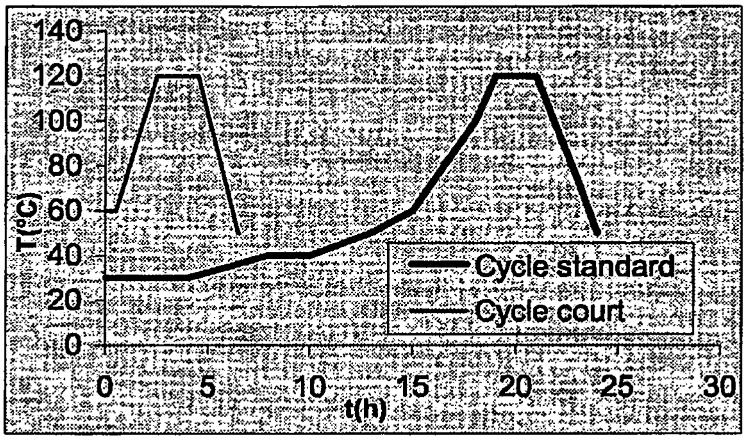


CYCLES THERMIQUES, STANDARD ET COURT
(départ 60°C)

FIGURE 5

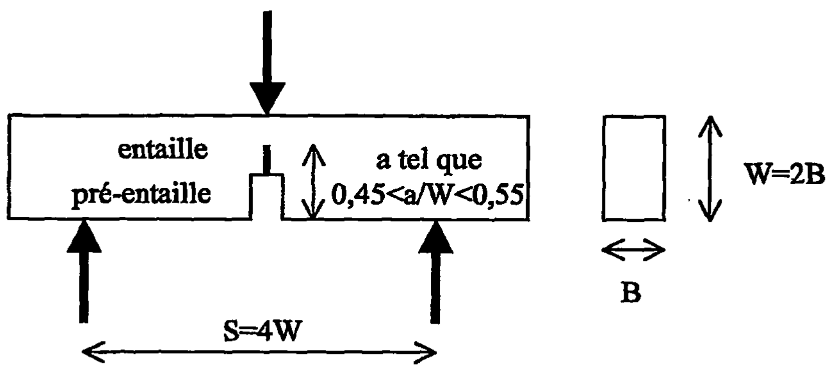


GEOMETRIE D'UN ECHANTILLON DE FLEXION 3 POINTS

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4348497 A
- US 5512376 A
- US 4686250 A


### Littérature non-brevet citée dans la description


- **SAUVANT V ; HALARY J.L.** *J.Appl. Polym. Sci,* 2001, vol. 82, 759
- **SAUVANT V ; HALARY J.L.** *Composite Sci et Tech,* 2002, vol. 62, 481
- **JACKSON W. J. ; CALDWELL J.R.** *J.Appl. Polym. Sci,* 1967, vol. 11, 211
- **JACKSON W.J. ; CALDWELL J.R.** *J.Appl. Polym. Sci,* 1967, vol. 11, 227
- Handbook of Solubility Parameters. **BARTON A.F.M.** Handbook of Solubility Parameters. CRC Press, 1991
- **VAN KREVELEN, D.W.** Properties of Polymers. Elsevier, 1990